# EUROPEAN PATENT APPLICATION

(11) **EP 4 694 400 A1**
(43) Date of publication of application: **11.02.2026**
(21) Application number: 23936076.1
(22) Date of filing: 10.05.2023
(51) Int. Cl.: H04W 56/00

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LENG, Bingxue, Dongguan, Guangdong 523860 (CN); LU, Qianxi, Dongguan, Guangdong 523860 (CN)
(74) Representative: Novagraaf Technologies
(86) International application number: PCT/CN2023/093279
(87) International publication number: WO 2024/229755

(57) **Abstract**

Provided are a communication method and a communication apparatus. The method comprises: a communication end acquires first information, the first information comprising an association relationship and/or a synchronization relationship; and the communication end performs coordinated transmission or synchronous transmission according to the first information. The method in embodiments of the present application can achieve coordinated transmission or synchronous transmission.

## Description

### TECHNICAL FIELD

Embodiments of the present disclosure relate to the field of communications, and in particular, relate to a communication method and a communication apparatus.

### RELATED ART

With the developments of communication technologies, some communication systems have a requirement for cooperative transmission or synchronized transmission. However, how to perform cooperative transmission or synchronized transmission is unclear.

### SUMMARY

Embodiments of the present disclosure provide a communication method and a communication apparatus. Various aspects of the embodiments of the present disclosure are described hereinafter.

In a first aspect, a communication method is provided. The method is performed by a communication terminal, and includes: acquiring first information, wherein the first information includes at least one of a correlation or a synchronization state; and performing cooperative transmission or synchronized transmission based on the first information.

In a second aspect, a communication apparatus is provided. The apparatus includes: an acquiring unit, configured to acquire first information, wherein the first information includes at least one of a correlation or a synchronization state; and a transmitting unit, configured to perform cooperative transmission or synchronized transmission based on the first information.

In a third aspect, a communication device is provided. The communication device includes a memory and a processor, and the memory stores one or more programs, wherein the processor is configured to call the one or more programs in the memory to cause the communication device to perform the method according to the first aspect.

In a fourth aspect, a communication device is provided. The communication device includes a processor, wherein the processor is configured to call one or more programs from a memory to cause the communication device to perform the method according to the first aspect.

In a fifth aspect, a chip is provided. The chip includes a processor, wherein the processor is configured to call one or more programs from a memory to cause a device equipped with the chip to perform the method according to the first aspect.

In a sixth aspect, a computer-readable storage medium is provided. The computer-readable storage medium includes one or more programs, wherein the one or more programs, when called and run by a computer, cause the computer to perform the method according to the first aspect.

In a seventh aspect, a computer program product is provided. The computer program product includes one or more programs, wherein the one or more programs, when called and run by a computer, cause the computer to perform the method according to the first aspect.

In an eighth aspect, a computer program is provided. The computer program causes a computer to perform the method according to the first aspect.

In the embodiments of the present disclosure, the first information includes at least one of the correlation or the synchronization state, and the communication terminal performs the cooperative transmission or the synchronized transmission based on the first information, such that the cooperative transmission or the synchronized transmission is implemented.

### BRIEF DESCRIPTION OF DRAWINGS

FIG. 1 is a schematic diagram of a wireless communication system according to some embodiments of the present disclosure;
FIG. 2 is a schematic diagram of a multi-modality service scenario according to some embodiments of the present disclosure;
FIG. 3 is a schematic diagram of sidelink (SL) feedback;
FIG. 4 is a schematic flowchart of a communication method according to some embodiments of the present disclosure;
FIG. 5 is a schematic diagram of synchronized transmission or cooperative transmission on an SL according to some embodiments of the present disclosure;
FIG. 6 is a schematic diagram of synchronized transmission or cooperative transmission on an SL according to some embodiments of the present disclosure;
FIG. 7 is a schematic block diagram of a communication apparatus according to some embodiments of the present disclosure; and
FIG. 8 is a schematic block diagram of a device according to some embodiments of the present disclosure.

### DETAILED DESCRIPTION

The technical solutions according to the present disclosure are described hereinafter in conjunction with the accompanying drawings.

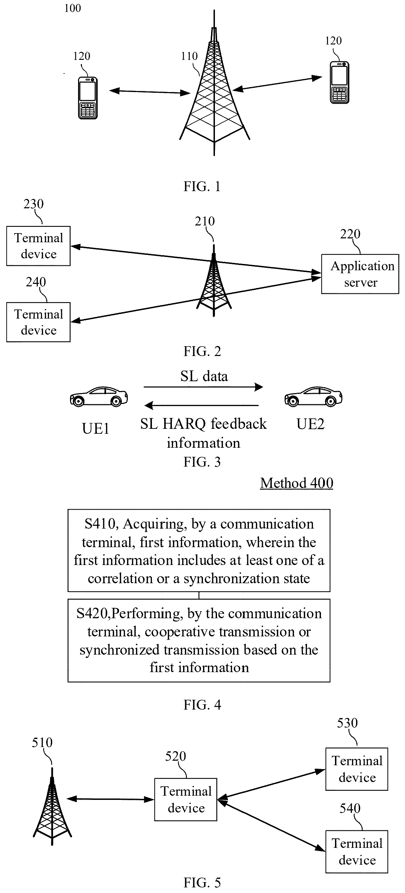

FIG. 1 is a schematic diagram of a wireless communication system 100 according to some embodiments of the present disclosure. The wireless communication system 100 includes a network device 110 and a user equipment (UE) 120. The network device 110 communicates with the UE120. The network device 110 provides a communication coverage for a specific geographical area, and communicates with the UE120 within the coverage area. The UE120 accesses a network (for example, a wireless network) via the network device 110.

FIG. 1 illustrates a network device and two UEs. In some embodiments, the wireless communication system 100 includes a plurality of network devices, and another number of terminal devices are disposed within a coverage range of each network device, which is not limited in the embodiments of the present disclosure. In some embodiments, the wireless communication system 100 also includes other network entities, for example, a network controller and a mobile management entity, which are not limited in the embodiments of the present disclosure.

It should be understood that the technical solutions according to the embodiments of the present disclosure are applicable to various communication systems, for example, a 5^{th} generation (5G) system, new radio (NR), a long-term evolution (LTE) system, an LTE frequency division-duplex (FDD) system, LTE time-division duplex (TDD), and the like. The technical solutions according to the embodiments of the present disclosure are also applicable to various future communication systems, for example, a 6^{th} generation mobile communication system, a satellite communication system, and the like.

The UE in the embodiments of the present disclosure is referred to as a terminal device, an access terminal, a subscriber unit, a subscriber station, a mobile station, a mobile station (MS), a mobile terminal (MT), a remote station, a remote terminal, a mobile device, a subscriber terminal, a terminal, a wireless communication device, a user agent, a user device, or the like. The UE in the embodiments of the present disclosure refers to a device that provides voice and/or data connectivity to users, and is used to connect people, objects, and machines, for example, a handheld device with wireless connection function, an in-vehicle device, and the like. The UE in the embodiments of the present disclosure is a mobile phone, a pad, a laptop, a handheld computer, a mobile Internet device (MID), a wearable device, a virtual reality (VR) device, an augmented reality (AR) device, a wireless terminal in industry control, a wireless terminal in self-driving, a wireless terminal in remote medical surgery, a wireless terminal in smart gride, a wireless terminal in transportation safety, a wireless terminal in smart city, a wireless terminal in smart home, and the like. In some embodiments, the UE acts as a station. For example, the UE acts as a scheduling entity, and provides SL signals between UEs in vehicle-to-X (V2X) or device-to-device (D2D), and the like. For example, a cellular phone and a car communicate with each other via the SL signals. A cellular phone and a smart home device communicate with each other without the need to relay communication signals of the station.

The network device in the embodiments of the present disclosure may be a device used for communication with the UE, and is also referred to as an access network device or a wireless access network device, for example, a station. The network device in the embodiments of the present disclosure may refer to a radio access network (RAN) node (or device) that connects the UE to the wireless network. In a broad sense, the station may be a NodeB, an evolved NodeB (eNB), a next generation NodeB (gNB), a relay station, an access point, a transmission and reception point (TRP), a transmission point (TP), a main NodeB (MeNB), a secondary NodeB (SeNB), a multi-standard radio (MSR) node, a home gNB, a network controller, an access node, an access point (AP), a transmitter node, a transceiver node, a base band unit (BBU), a remote radio unit (RRU), an active antenna unit (AAU), a remote radio head (RRH), a central unit (CU), a distributed unit (DU), a positioning node, and the like. The station may be a macro station, a micro station, a relay node, a donor node or an analogue, or a combination thereof.

In sone embodiments, the network device may be fixed or mobile. For example, a helicopter or unmanned aerial vehicle may act as a mobile network device, and the coverage area of one or more cells is repositioned based on a varying location of the mobile network device. For example, the helicopter or unmanned air vehicle may act as a device for communicating with another network device. In some embodiments, the network device refers to a CU or a DU, the network device includes a CU and a DU, or the network device further includes an AAU.

It should be understood that the network device may be deployed on land (for example, indoors or outdoors, or handheld, or vehicle-mounted deployment); or the network device is deployed on water; or the network device may be deployed in air (for example, on an aerial vehicle, a balloon, or a satellite). The scenarios of the network device and the embodiments of the present disclosure are not limited in the embodiments of the present disclosure.

It should be understood that all or part of functions of the network device and the UE in the present disclosure may be achieved by virtue of software functions running on the hardware, or via virtualization functions instantiated on the platform (such as a cloud platform).

With the development of communication technologies, some communication systems have the requirement for cooperative transmission or synchronized transmission. For example, the version 18 (R18) of the communication protocol proposes scenarios and requirements for cooperative transmission in extended reality (XR). TS 22.847 of R18 proposes transmission scenarios and requirements for the multi-modality service. That is:
multi-modality interactions; and
an ultra-low latency with extremely high availability, reliability, and security.

For the use case of the immersive multi-modality VR application defined in TS 22.847 (Clause 5.1), an example of synchronization requirements for the multi-modality service is listed in the following table.

| | Synchronization threshold | |
|---|---|---|
| Audio-tactile | Audio delay [50ms] | Tactile delay [25ms] |

As illustrated in FIG. 2, the terminal device 230 and the terminal device 240 perform data transmission with the application server 220 via the network device 210. The terminal device 230 and the terminal device 240 may be VR devices. For example, the terminal device 230 is a VR glasses, and the terminal device 240 is VR gloves with touch feedback. Data transmission of the terminal device 230 and the terminal device 240 with the application server 220 needs to satisfy synchronization requirements. Otherwise, the picture and the tactile sense are not synchronized, and consequently the user experience is affected.

In the data transmission process, application layer data interacted between the UE and the application server or a peer UE is usually application layer data that is specifically encoded and compressed, that is, an application data unit (ADU). The application data unit may be a packet data unit (PDU) set, a data burst, a frame, a coding slice, or other forms or names. For example, the common H.264 video codec technology standard is adopted for encoding and compression. In the H.264 standard, data is formatted via a network abstract layer (NAL), and header information of application layer data is provided. In the encoding process, part of video frame sequences are compressed as I frames, part of video frame sequences are compressed as P frames, and part of video frame sequences are compressed as B frames. The I frames are key frames and means intra-frame compression, and decoding of the I frames only needs data of the frames. The P frames and the B frames do not have complete picture data and only have data that differs from data in the adjacent frame pictures, and the pictures of adjacent frames are superimposed with the differences defined in the frames to generate the final image in decoding the frames.

Two ADUs in the application layer may have a correlation. For example, audio data and another video or image data, or a video frame and a corresponding subtitle, need to be played back simultaneously to satisfy viewing requirements of the user. For example, a B-frame data is decoded correctly with data of correlated previous and next frames. In a case where a data frame is successfully transmitted to the UE, and the correlated frame is not transmitted to the UE, playback of the audio and the video is asynchronous, decoding is failed, and the user experience is greatly affected.

In general, objects with the correlation or objects requiring cooperative transmission are correlated with different devices or UEs, different quality of service (QoS) flows, different PDU sessions, or different QoS flows or logical channels (LCHs) of the UE. Based on the synchronization requirements for multi-modality service transmission, requirements of synchronized transmission or cooperative transmission for different corresponding objects are satisfied.

In the SL, the UE discovers (and selects) another SL UE nodes (SL UE discovery and selection) in several ways. The following introduces two common models.

### Model A discovery ("I am here.")

The model defines two roles for the UE participating in discovery. That is, (1) a advertising UE, the advertising UE advertises information that is used by neighboring UEs with a discovery grant; (2) a monitoring UE, the monitoring UE monitors information of interest near the advertising UE.

In the model, the advertising UE broadcasts notification messages at predefined discovery intervals, and the monitoring UE that is interested in the messages reads and processes the discovery messages. The model is equivalent to "I am here" because the advertising UE broadcasts information thereof.

### Model B discovery ("who is there?"/"are you there?")

The model defines two roles for the UE participating in discovery. That is, (1) a discoverer UE, the discoverer UE transmits a request message including information of interest in discovery; (2) a discovered UE, a UE that receives the request message responds to information related to the request message from the discoverer UE.

The model is equivalent to "who is there?"/"are you there?" because the discoverer UE transmits the information that the discoverer UE expects to receive a responses from another UE. The information is a proximity services (ProSe) application identifier corresponding to a group, and members of the group respond to the information.

It can be seen that the target UE discovers another SL UE in several ways in the SL currently.

In the long-term evolution vehicle-to-everything (LTE-V2X), the data transmitted in the SL is mainly transmitted by broadcasting, and the SL data is transmitted by blind retransmission. That is, the transmitter does not need to determine whether to retransmit or newly transmit based on hybrid automatic repeat request (HARQ) feedback from the receiver, and independently retransmits the SL data at a number of times and then performs a new transmission.

In the new radio vehicle-to-everything (NR-V2X), an SL HARQ feedback mechanism is introduced in the SL to satisfy the stricter requirements for the transmission reliability. That is, the receiver UE detects a physical sidelink control channel (PSCCH) or a physical sidelink shared channel (PSSCH) from the transmitter UE, and transmits the HARQ feedback information to the transmitter UE based on the detection result. The HARQ feedback information is carried in a physical sidelink feedback channel (PSFCH) channel.

NR-V2X supports three SL data transmission mode, that is, unicast, multicast, and broadcast. The SL HARQ feedback is only applicable to unicast and multicast, and is not applicable to broadcast. In the broadcast transmission mode, similar to the LTE-V2X, the transmitter UE transmits the SL data at a number of times by the blind retransmission mode to improve the transmission reliability.

In the unicast transmission mode, in a case where UE1 (the transmitter) and UE2 (the receiver) establish a unicast communication link therebetween, the transmitter transmits SL data to the receiver, and the receiver transmits a PSFCH to the transmitter based on the detection result and carries HARQ feedback information in the PSFCH, as illustrated in FIG. 3.

Two SL HARQ feedback modes are introduced in the multicast transmission mode. That is, an SL HARQ feedback mode in which only a negative acknowledgment (NACK) is fed back, and an SL HARQ feedback mode in which an acknowledgment (ACK) or a NACK is fed back. The transmitter indicates an SL HARQ feedback mode of the receiver in the SL control information.

It can be seen from above description that some communication systems have a requirement for cooperative transmission or synchronized transmission. However, how to perform cooperative transmission or synchronized transmission is unclear.

The present disclosure provides a communication method and a communication apparatus to solve one or more of above technical problems. The embodiments of the present disclosure are described in detail hereinafter in conjunction with FIG. 4 to FIG. 6.

FIG. 4 is a schematic flowchart of a communication method according to some embodiments of the present disclosure. The method illustrated in FIG. 4 includes S410 to S420.

In S410, a communication terminal acquires first information.

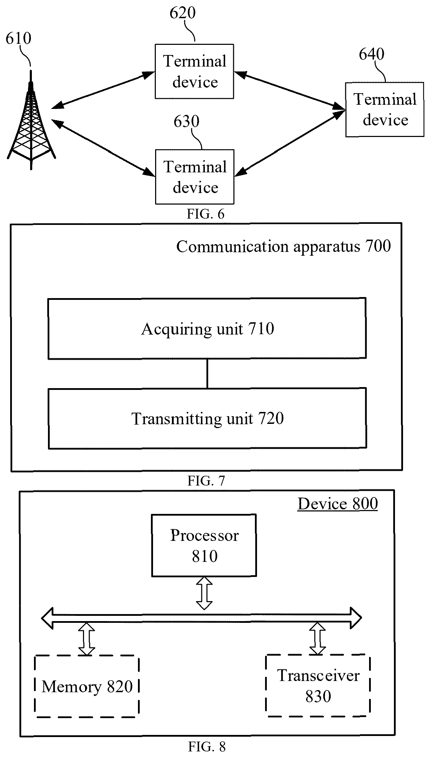

The communication terminal is a transmitter or a receiver. In some embodiments, the communication terminal includes one or more transmitters. For example, as illustrated in FIG. 5, the terminal device 530 and the terminal device 540 are transmitters, and the terminal device 520 is a receiver. Alternatively, the communication terminal includes one or more receivers. For example, as illustrated in FIG. 6, the terminal device 640 is a transmitter, and the terminal device 620 and the terminal device 630 is receivers.

The communication terminal includes a plurality of UEs or different paths of the same UE. In some embodiments, the paths include at least one of: a QoS flow, an application, a UE, a PDU session, a bearer (for example, a radio bearer (RB)), a user data radio bearer (DRB), an LCH, a logical channel group (LCG), or a carrier.

In some embodiments, the first information includes at least one of a correlation or a synchronization state. In some embodiments, at least one of the correlation or the synchronization state means that a plurality of objects having the correlation or the synchronization state use the first information, and/or, objects that perform cooperative transmission or synchronized transmission belong to the same group. In some embodiments, the group includes at least one of a group of UEs, a group of applications, a group of services, a group of QoS flows, a group of bearers, a group of DRBs, a group of carriers, a group of sessions, a group of LCHs, a group of LCGs, a group of PDU sessions, a group of data bursts, a group of data packets, or a group of paths.

In some embodiments, at least one of the correlation or the synchronization state is configured to determine a plurality of objects having the correlation or the synchronization state, a plurality of objects that use the first information, determine which objects have the correlation or the synchronization state, determine objects that perform cooperative transmission or synchronized transmission, or determine which objects perform cooperative transmission or synchronized transmission.

In some embodiments, the object includes at least one of a UE, an application, a service, a QoS flow, a session, a bearer, a DRB, a carrier, an LCH, an LCG, a PDU session, a data burst, a data packet, or a path.

In some embodiments, the correlation includes at least one of: a correlation between a plurality of UEs, a correlation between a plurality of applications, a correlation between a plurality of services, a correlation between a plurality of QoS flows, a correlation between a plurality of LCHs, a correlation between a plurality of LCGs, a correlation between a plurality of sessions, a correlation between a plurality of bearers, a correlation between a plurality of DRBs, a correlation between a plurality of carriers, a correlation between a plurality of paths, a correlation between a plurality of PDU sessions, a correlation between a plurality of data bursts, or a correlation between a plurality of data packets.

In some embodiments, the correlation is present between transmitters, between receivers, or between the transmitter and the receiver. For example, the correlation between the plurality of UEs means a correlation between a plurality of transmitters, a correlation between a plurality of receivers, or a correlation between at least one transmitter and at least one receiver. For example, the correlation between the plurality of QoS flows means a correlation between a plurality of QoS flows of the transmitter, a correlation between a plurality of QoS flows of the receiver, or a correlation between at least one QoS flow of the transmitter and at least one QoS flow of the receiver.

In some embodiments, the synchronization state includes at least one of: information at a QoS flow level, information at a PDU session level, information at an LCH level, information at an LCG level, information at a data burst level, information at a data packet level, information at a bearer level, information at a DRB level, information at a carrier level, information at a path level, information at a UE level, information at an application level, information at a service level, or information at a session level.

In some embodiments, the synchronization state is present between transmitters, between receivers, or between the transmitter and the receiver. For example, the synchronization state includes information at the QoS flow between a plurality of transmitters, information at the QoS flow between a plurality of receiver, or information at the QoS flow between at least one transmitter and at least one receiver.

The information at the QoS flow level or information of the QoS flow includes at least one of: a QoS flow identifier, transmission latency budget information, latency information, priority information, a guaranteed bit rate (GBR), a UE identifier, or a transmission channel identifier.

For example, the transmitter buffers data, transmits data, packetizes data, delivers data to a low layer, concurrently transmits data, concurrently packetizes data, concurrently delivers data to a low layer, transmits data within a time window, delivers data to a low layer within a time window, packetizes data within a time window, or buffers data within a time window based on the information at the QoS flow level. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated QoS flows, or synchronized QoS flows. For example, the UE processes data of correlated QoS flows concurrently, processes data of correlated QoS flows within a time, or processes data of correlated QoS flows at a condition. For example, the UE processes data of correlated QoS flows in association, processes data of correlated QoS flows within a time in association, or processes data of correlated QoS flows at a condition in association.

For example, the receiver buffers data, decodes data, delivers data to an application layer or a high layer, concurrently decodes data, concurrently delivers data to an application layer or a high layer, decodes data within a time window, or delivers data to an application layer within a time window based on the information at the QoS flow level. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated QoS flows, or synchronized QoS flows. For example, the UE processes data of correlated QoS flows concurrently, processes data of correlated QoS flows within a time, or processes data of correlated QoS flows at a condition. For example, the UE processes data of correlated QoS flows in association, processes data of correlated QoS flows within a time in association, or processes data of correlated QoS flows at a condition in association.

The information at the PDU session level or information of the PDU session includes at least one of: a PDU session identifier, transmission latency budget information, latency information, priority information, corresponding service/application information, a UE identifier, a transmission channel identifier, or a QoS flow identifier.

For example, the transmitter buffers data, transmits data, packetizes data, delivers data to a low layer, concurrently transmits data, concurrently packetizes data, concurrently delivers data to a low layer, transmits data within a time window, delivers data to a low layer within a time window, packetizes data within a time window, or buffers data within a time window based on the information at the PDU session level. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated PDU sessions, or synchronized PDU sessions. For example, the UE processes data of correlated PDU sessions concurrently, processes data of correlated PDU sessions within a time, or processes data of correlated PDU sessions at a condition. For example, the UE processes data of correlated PDU sessions in association, processes data of correlated PDU sessions within a time in association, or processes data of correlated PDU sessions at a condition in association.

For example, the receiver buffers data, decodes data, delivers data to an application layer or a high layer, concurrently decodes data, concurrently delivers data to an application layer or a high layer, decodes data within a time window, or delivers data to an application layer within a time window based on the information at the PDU session level. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated PDU sessions, or synchronized PDU sessions. For example, the UE processes data of correlated PDU sessions concurrently, processes data of correlated PDU sessions within a time, or processes data of correlated PDU sessions at a condition. For example, the UE processes data of correlated PDU sessions in association, processes data of correlated PDU sessions within a time in association, or processes data of correlated PDU sessions at a condition in association.

The information at the LCH level or information of the LCH includes at least one of: an LCH identifier, priority information, importance information, a prioritized bit rate (PBR), a bucket size duration (BSD), an available configured grant, an available carrier, an available dynamic grant, an LCH mapping restriction, a duplicate transmission configuration, a repetitive transmission configuration, a duplicate transmission activation indication, a duplicate transmission deactivation indication, a repetitive transmission activation indication, a repetitive transmission deactivation indication, a UE identifier, a bearer identifier, or a QoS flow identifier.

For example, the transmitter buffers data, transmits data, packetizes data, delivers data to a low layer, concurrently transmits data, concurrently packetizes data, concurrently delivers data to a low layer, transmits data within a time window, delivers data to a low layer within a time window, packetizes data within a time window, or buffers data within a time window based on the information at the LCH level. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated LCHs, or synchronized LCHs. For example, the UE processes data of correlated LCHs concurrently, processes data of correlated LCHs within a time, or processes data of correlated LCHs at a condition. For example, the UE processes data of correlated LCHs in association, processes data of correlated LCHs within a time in association, or processes data of correlated LCHs at a condition in association.

For example, the receiver buffers data, decodes data, delivers data to an application layer or a high layer, concurrently decodes data, concurrently delivers data to an application layer or a high layer, decodes data within a time window, or delivers data to an application layer within a time window based on the information at the LCH level. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated LCHs, or synchronized LCHs. For example, the UE processes data of correlated LCHs concurrently, processes data of correlated LCHs within a time, or processes data of correlated LCHs at a condition. For example, the UE processes data of correlated LCHs in association, processes data of correlated LCHs within a time in association, or processes data of correlated LCHs at a condition in association.

The information at the LCG level or information of the LCG includes at least one of: an LCG identifier, a corresponding LCH identifier, priority information, importance information, an available configured grant, an available carrier, an available dynamic grant, an LCG mapping restriction, a duplicate transmission configuration, a repetitive transmission configuration, a duplicate transmission activation indication, a duplicate transmission deactivation indication, a repetitive transmission activation indication, a repetitive transmission deactivation indication, a UE identifier, a bearer identifier, or a QoS flow identifier.

For example, the transmitter buffers data, transmits data, packetizes data, delivers data to a low layer, concurrently transmits data, concurrently packetizes data, concurrently delivers data to a low layer, transmits data within a time window, delivers data to a low layer within a time window, packetizes data within a time window, or buffers data within a time window based on the information at the LCG level. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated LCGs, or synchronized LCGs. For example, the UE processes data of correlated LCGs concurrently, processes data of correlated LCGs within a time, or processes data of correlated LCGs at a condition. For example, the UE processes data of correlated LCGs in association, processes data of correlated LCGs within a time in association, or processes data of correlated LCGs at a condition in association.

For example, the receiver buffers data, decodes data, delivers data to an application layer or a high layer, concurrently decodes data, concurrently delivers data to an application layer or a high layer, decodes data within a time window, or delivers data to an application layer within a time window based on the information at the LCG level. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, data means one or more pieces of data, a data set, correlated data, synchronized data, correlated LCGs, or synchronized LCGs. For example, the UE processes data of correlated LCGs concurrently, processes data of correlated LCGs within a time, or processes data of correlated LCGs at a condition. For example, the UE processes data of correlated LCGs in association, processes data of correlated LCGs within a time in association, or processes data of correlated LCGs at a condition in association.

The information at the data burst level or information of the data burst includes at least one of: timestamp information of the data burst, data packet information correlated with the data burst, PDU information correlated with the data burst, PDU set information correlated with the data burst, a start time of the data burst, an end time of the data burst, a period of the data burst, pattern information of the data burst, priority information, importance information, reliability information, generation time information, transmission time information, arrival time information, decoding time information, sequence number (SN) information, a duplicate transmission configuration, a repetitive transmission configuration, a duplicate transmission activation indication, a duplicate transmission deactivation indication, a repetitive transmission activation indication, a repetitive transmission deactivation indication, a UE identifier, a bearer identifier, or a QoS flow identifier. In some embodiments, the start time of the data burst means a start time of each period or pattern, a start time of a specific period or pattern (for example, a first period), a start time of each data burst, or a start time of a specific data burst. In some embodiments, the end time of the data burst means an end time of each period or pattern, an end time of a specific period or pattern (for example, a first period), a start time of each data burst, or an end time of a specific data burst.

For example, the transmitter buffers a data burst, transmits a data burst, packetizes a data burst, delivers a data burst to a low layer, concurrently transmits data bursts, concurrently packetizes data bursts, concurrently delivers data bursts to a low layer, transmits a data burst within a time window, delivers a data burst to a low layer within a time window, packetizes data bursts within a time window, or buffers a data burst within a time window based on the timestamp information. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, the receiver buffers a data burst, decodes a data burst, delivers a data burst to an application layer or a high layer, concurrently decodes data bursts, concurrently delivers data bursts to an application layer or a high layer, decodes a data burst within a time window, or delivers a data burst to an application layer within a time window based on the timestamp information. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, the transmitter buffers a data burst, transmits a data burst, packetizes a data burst, delivers a data burst to a low layer, concurrently transmits data bursts, concurrently packetizes data bursts, concurrently delivers data bursts to a low layer, transmits a data burst within a time window, delivers a data burst to a low layer within a time window, packetizes data bursts within a time window, or buffers a data burst within a time window based on the time information. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, the receiver buffers a data burst, decodes a data burst, delivers a data burst to an application layer or a high layer, concurrently decodes data bursts, concurrently delivers data bursts to an application layer or a high layer, decodes a data burst within a time window, or delivers a data burst to an application layer within a time window based on the time information. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, the transmitter buffers a data burst, transmits a data burst, packetizes a data burst, delivers a data burst to a low layer, concurrently transmits data bursts, concurrently packetizes data bursts, concurrently delivers data bursts to a low layer, transmits a data burst within a time window, delivers a data burst to a low layer within a time window, packetizes data bursts within a time window, or buffers a data burst within a time window based on the SN. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, the receiver buffers a data burst, decodes a data burst, delivers a data burst to an application layer or a high layer, concurrently decodes data bursts, concurrently delivers data bursts to an application layer or a high layer, decodes a data burst within a time window, or delivers a data burst to an application layer within a time window based on the SN. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, based on the priority information, the transmitter buffers a data burst, transmits a data burst, packetizes a data burst, delivers a data burst to a low layer, concurrently transmits data bursts, concurrently packetizes data bursts, concurrently delivers data bursts to a low layer, transmits a data burst within a time window, delivers a data burst to a low layer within a time window, packetizes data bursts within a time window, or buffers a data burst within a time window; buffers a data burst with a higher priority, transmits a data burst with a higher priority, packetizes a data burst with a higher priority, delivers a data burst with a higher priority to a low layer, concurrently transmits data bursts with higher priorities, concurrently packetizes data bursts with higher priorities, concurrently delivers data bursts to a low layer with higher priorities, transmits a data burst with a higher priority within a time window, delivers a data burst with a higher priority to a low layer within a time window, packetizes data bursts with higher priorities within a time window, or buffers a data burst with a higher priority within a time window; buffers a data burst with a lower priority, transmits a data burst with a lower priority, packetizes a data burst with a lower priority, delivers a data burst with a lower priority to a low layer, concurrently transmits data bursts with lower priorities, concurrently packetizes data bursts with lower priorities, concurrently delivers data bursts to a low layer with lower priorities, transmits a data burst with a lower priority within a time window, delivers a data burst with a lower priority to a low layer within a time window, packetizes data bursts with lower priorities within a time window, or buffers a data burst with a lower priority within a time window; or, buffers a data burst with the same priority, transmits a data burst with the same priority, packetizes a data burst with the same priority, delivers a data burst with the same priority to a low layer, concurrently transmits data bursts with the same priority, concurrently packetizes data bursts with the same priority, concurrently delivers data bursts to a low layer with the same priority, transmits a data burst with the same priority within a time window, delivers a data burst with the same priority to a low layer within a time window, packetizes data bursts with the same priority within a time window, or buffers a data burst with the same priority within a time window. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, based on the priority information, the receiver buffers a data burst, decodes a data burst, delivers a data burst to an application layer or a high layer, concurrently decodes data bursts, concurrently delivers data bursts to an application layer or a high layer, decodes a data burst within a time window, or delivers a data burst to an application layer within a time window; buffers a data burst with a higher priority, decodes a data burst with a higher priority, delivers a data burst with a higher priority to an application layer or a high layer, concurrently decodes data bursts with higher priorities, concurrently delivers data bursts with higher priorities to an application layer or a high layer, decodes a data burst with a higher priority within a time window, or delivers a data burst with a higher priority to an application layer within a time window; buffers a data burst with a lower priority, decodes a data burst with a lower priority, delivers a data burst with a lower priority to an application layer or a high layer, concurrently decodes data bursts with lower priorities, concurrently delivers data bursts with lower priorities to an application layer or a high layer, decodes a data burst with a lower priority within a time window, or delivers a data burst with a higher priority to an application layer within a time window; or, buffers a data burst with the same priority, decodes a data burst with the same priority, delivers a data burst with the same priority to an application layer or a high layer, concurrently decodes data bursts with the same priority, concurrently delivers data bursts with the same priority to an application layer or a high layer, decodes a data burst with the same priority within a time window, or delivers a data burst with the same priority to an application layer within a time window. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, based on the importance information or the reliability information, the transmitter buffers a data burst, transmits a data burst, packetizes a data burst, delivers a data burst to a low layer, concurrently transmits data bursts, concurrently packetizes data bursts, concurrently delivers data bursts to a low layer, transmits a data burst within a time window, delivers a data burst to a low layer within a time window, packetizes data bursts within a time window, or buffers a data burst within a time window; buffers a data burst with a higher priority, transmits a data burst with a higher priority, packetizes a data burst with a higher priority, delivers a data burst with a higher priority to a low layer, concurrently transmits data bursts with higher priorities, concurrently packetizes data bursts with higher priorities, concurrently delivers data bursts to a low layer with higher priorities, transmits a data burst with a higher priority within a time window, delivers a data burst with a higher priority to a low layer within a time window, packetizes data bursts with higher priorities within a time window, or buffers a data burst with a higher priority within a time window; buffers a data burst with a lower priority, transmits a data burst with a lower priority, packetizes a data burst with a lower priority, delivers a data burst with a lower priority to a low layer, concurrently transmits data bursts with lower priorities, concurrently packetizes data bursts with lower priorities, concurrently delivers data bursts to a low layer with lower priorities, transmits a data burst with a lower priority within a time window, delivers a data burst with a lower priority to a low layer within a time window, packetizes data bursts with lower priorities within a time window, or buffers a data burst with a lower priority within a time window; or, buffers a data burst with the same priority, transmits a data burst with the same priority, packetizes a data burst with the same priority, delivers a data burst with the same priority to a low layer, concurrently transmits data bursts with the same priority, concurrently packetizes data bursts with the same priority, concurrently delivers data bursts to a low layer with the same priority, transmits a data burst with the same priority within a time window, delivers a data burst with the same priority to a low layer within a time window, packetizes data bursts with the same priority within a time window, or buffers a data burst with the same priority within a time window. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

For example, based on the importance information or the reliability information, the receiver buffers a data burst, decodes a data burst, delivers a data burst to an application layer or a high layer, concurrently decodes data bursts, concurrently delivers data bursts to an application layer or a high layer, decodes a data burst within a time window, or delivers a data burst to an application layer within a time window; buffers a data burst with a higher priority, decodes a data burst with a higher priority, delivers a data burst with a higher priority to an application layer or a high layer, concurrently decodes data bursts with higher priorities, concurrently delivers data bursts with higher priorities to an application layer or a high layer, decodes a data burst with a higher priority within a time window, or delivers a data burst with a higher priority to an application layer within a time window; buffers a data burst with a lower priority, decodes a data burst with a lower priority, delivers a data burst with a lower priority to an application layer or a high layer, concurrently decodes data bursts with lower priorities, concurrently delivers data bursts with lower priorities to an application layer or a high layer, decodes a data burst with a lower priority within a time window, or delivers a data burst with a higher priority to an application layer within a time window; or, buffers a data burst with the same priority, decodes a data burst with the same priority, delivers a data burst with the same priority to an application layer or a high layer, concurrently decodes data bursts with the same priority, concurrently delivers data bursts with the same priority to an application layer or a high layer, decodes a data burst with the same priority within a time window, or delivers a data burst with the same priority to an application layer within a time window. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data bursts, a data burst set, correlated data bursts, or synchronized data bursts. For example, the UE processes correlated data bursts concurrently, processes correlated data bursts within a time, or processes correlated data bursts at a condition. For example, the UE processes correlated data bursts in association, processes correlated data bursts within a time in association, or processes correlated data bursts at a condition in association.

The information at the data packet level or information of the data packet includes at least one of: timestamp information of the data packet, priority information, importance information, reliability information, generation time information, transmission time information, arrival time information, decoding time information, a duplicate transmission configuration, a repetitive transmission configuration, SN information, a duplicate transmission configuration, a repetitive transmission configuration, a start time of the data packet, an end time of the data packet, a period of the data packet, pattern information of the data packet, a duplicate transmission activation indication, a duplicate transmission deactivation indication, a repetitive transmission activation indication, a repetitive transmission deactivation indication, a UE identifier, a bearer identifier, a QoS flow identifier, a corresponding PDU set identifier, or a corresponding data burst identifier. In some embodiments, the start time of the data packet means a start time of each period or pattern, a start time of a specific period or pattern (for example, a first period), a start time of each data packet, or a start time of a specific data packet. In some embodiments, the end time of the data packet means an end time of each period or pattern, an end time of a specific period or pattern (for example, a first period), a start time of each data packet, or an end time of a specific data packet. In some embodiments, the SN information means an SN indicating the data packet, an SN indicating a data burst corresponding to the data packet, an SN indicating a PDU set corresponding to the data packet, an SN combination, a starting SN and a correlated end SN, a starting SN and at least one correlated SN, and the like.

For example, the transmitter buffers a data packet, transmits a data packet, delivers a data packet to a low layer, concurrently transmits data packets, concurrently delivers data packets to a low layer, transmits a data packet within a time window, delivers a data packet to a low layer within a time window, or buffers a data packet within a time window based on the timestamp information. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, the receiver buffers a data packet, decodes a data packet, delivers a data packet to an application layer or a high layer, concurrently decodes data packets, concurrently delivers data packets to an application layer or a high layer, decodes a data packet within a time window, or delivers a data packet to an application layer within a time window based on the timestamp information. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data bursts at a condition in association.

The embodiments are illustrated using an example where UE1 and UE2 are the transmitters, and UE3 is the receiver. UE1 and UE2 know the correlation between UE1 and UE2 (for example, via the pre-configuration or the group of UEs). The application layer transmits data packets of UE1 and UE2 to an access stratums (AS) of UE1 and an AS of UE2. The AS of UE1 knows, based on the timestamp information, when to transmit the data packet (the timestamp information indicates a requirement or a decoding time of the receiver), and transmits the data packet to UE3 before a time corresponding to the timestamp. The AS of UE2 knows, based on the timestamp information, when to transmit the data packet (the timestamp information indicates a requirement or a decoding time of the receiver), and transmits the data packet to UE3 before a time corresponding to the timestamp. As such, after the data packets of UE1 and UE2 are transmitted over the air interface, the data of UE1 and the data of UE2 reach the receiver UE3 at the same time or within a proximity period, and thus are decoded at the receiver UE3 at the same time or within the proximity period.

The embodiments are illustrated using an example where UE1 and UE2 are the transmitters, and UE3 is the receiver. UE1 and UE2 know the correlation between UE1 and UE2 (for example, via the pre-configuration or the group of UEs). The AS of UE1 knows, based on the timestamp information, when to transmit the data packet (the timestamp information indicates a requirement or a decoding time of the receiver), then requests to transmit a resource of the data packet to UE3, and transmits the data packet to UE3 at a time corresponding to the timestamp information over the resource. The AS of UE2 knows, based on the timestamp information, when to transmit the data packet (the timestamp information indicates a requirement or a decoding time of the receiver), then requests to transmit a resource of the data packet to UE3, and transmits the data packet to UE3 at a time corresponding to the timestamp information over the resource. As such, a network (NW) schedules close resource positions for UE1 and UE2, such that the data of UE1 and the data of UE2 reach the receiver UE3 at the same time or within a proximity period, and are decoded at the receiver UE3 at the same time or within the proximity period.

The embodiments are illustrated using an example where UE1 and UE2 are the transmitters, and UE3 is the receiver. UE3 knows the correlation between UE1 and UE2 (for example, via the pre-configuration or the group of UEs). The AS of UE1 knows, based on the timestamp information, when to transmit the data packet (the timestamp information indicates a requirement or a decoding time of the receiver). In a case where UE3 receives the data packet from UE1 at a time corresponding to the timestamp, but does not receive the data packet transmitted by UE2 at the time corresponding to the timestamp, UE3 requests UE2 to transmit the data packet or retransmits the data packet.

The embodiments are illustrated using an example where UE1 and UE2 are the transmitters, and an NW is the receiver. The NW knows the correlation between UE1 and UE2 (for example, via the pre-configuration or the group of UEs). The AS of UE1 and the AS of UE2 know, based on the timestamp information, when to transmit the data packet (the timestamp information indicates a requirement or a decoding time of the receiver). In a case where the NW receives the data packet from UE1 at a time corresponding to the timestamp, but does not receive the data packet transmitted by UE2 at the time corresponding to the timestamp, the NW requests UE2 to transmit the data packet or retransmits the data packet.

The embodiments are illustrated using an example where UE1 is the transmitter, and UE3 and UE2 are the receivers. UE1 knows the correlation between UE2 and UE3 (for example, via the pre-configuration or the group of UEs). The application layer transmits data packets of UE3 and UE2 to the AS of UE1 based on the timestamp information. The AS of UE1 knows, based on the timestamp information, transmits the data packets of UE2 and UE3 at the time corresponding to the timestamp information (the timestamp information indicates a transmission time) or before the time (the timestamp information indicates a decoding time). The timestamp information is transmitted from the high layer the AS or transmitted to the AS by carrying in the data packet.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The application layer transmits data packets of UE1 and UE2 to an AS of UE1 and an AS of UE2. The AS of UE1 knows, based on the timestamp information, when to transmit the data packet (the timestamp information indicates a requirement or a decoding time of the receiver), and transmits the data packet to UE3 before a time corresponding to the timestamp. The AS of UE2 knows, based on the timestamp information, when to transmit the data packet (the timestamp information indicates a requirement or a decoding time of the receiver), and transmits the data packet to UE3 before a time corresponding to the timestamp. As such, after the data packets of UE1 and UE2 are transmitted over the air interface, the data of UE1 and the data of UE2 reach the receiver UE3 at the same time or within a proximity period, and thus are decoded at the receiver UE3 at the same time or within the proximity period.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The AS of UE1 knows, based on the timestamp information, when to transmit the data packet (the timestamp information indicates a requirement or a decoding time of the receiver), then requests to transmit a resource of the data packet to UE3, and transmits the data packet to UE3 at a time corresponding to the timestamp information over the resource. The AS of UE2 knows, based on the timestamp information, when to transmit the data packet (the timestamp information indicates a requirement or a decoding time of the receiver), then requests to transmit a resource of the data packet to UE3, and transmits the data packet to UE3 at a time corresponding to the timestamp information over the resource. As such, an NW schedules close resource positions for UE1 and UE2, such that the data of UE1 and the data of UE2 reach the receiver UE3 at the same time or within a proximity period, and are decoded at the receiver UE3 at the same time or within the proximity period.

The embodiments are illustrated using an example where UE1 and UE2 are the transmitters, and UE3 is the receiver. UE3 knows the synchronization state between UE1 and UE2 (for example, via the pre-configuration or the group of UEs). The AS of UE1 knows, based on the timestamp information, when to transmit the data packet (the timestamp information indicates a requirement or a decoding time of the receiver). In a case where UE3 receives the data packet from UE1 at a time corresponding to the timestamp, but does not receive the data packet transmitted by UE2 at the time corresponding to the timestamp, UE3 requests UE2 to transmit the data packet or retransmits the data packet.

The embodiments are illustrated using an example where UE1 and UE2 are the transmitters, and an NW is the receiver. The NW knows the synchronization state between UE1 and UE2 (for example, via the pre-configuration or the group of UEs). The AS of UE1 and the AS of UE2 know, based on the timestamp information, when to transmit the data packet (the timestamp information indicates a requirement or a decoding time of the receiver). In a case where the NW receives the data packet from UE1 at a time corresponding to the timestamp, but does not receive the data packet transmitted by UE2 at the time corresponding to the timestamp, the NW requests UE2 to transmit the data packet or retransmits the data packet.

The embodiments are illustrated using an example where UE1 is the transmitter, and UE3 and UE2 are the receivers. UE1 knows the synchronization state between UE2 and UE3 (for example, via the pre-configuration or the group of UEs). The application layer transmits data packets of UE3 and UE2 to the AS of UE1 based on the timestamp information. The AS of UE1 knows, based on the timestamp information, transmits the data packets of UE2 and UE3 at the time corresponding to the timestamp information (the timestamp information indicates a transmission time) or before the time (the timestamp information indicates a decoding time). The timestamp information is transmitted from the high layer the AS or transmitted to the AS by carrying in the data packet.

For example, the transmitter buffers a data packet, transmits a data packet, delivers a data packet to a low layer, concurrently transmits data packets, concurrently delivers data packets to a low layer, transmits a data packet within a time window, delivers a data packet to a low layer within a time window, or buffers a data packet within a time window based on the time information. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, the receiver buffers a data packet, decodes a data packet, delivers a data packet to an application layer or a high layer, concurrently decodes data packets, concurrently delivers data packets to an application layer or a high layer, decodes a data packet within a time window, or delivers a data packet to an application layer within a time window based on the time information. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, the transmitter buffers a data packet, transmits a data packet, delivers a data packet to a low layer, concurrently transmits data packets, concurrently delivers data packets to a low layer, transmits a data packet within a time window, delivers a data packet to a low layer within a time window, or buffers a data packet within a time window based on the SN. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, the receiver buffers a data packet, decodes a data packet, delivers a data packet to an application layer or a high layer, concurrently decodes data packets, concurrently delivers data packets to an application layer or a high layer, decodes a data packet within a time window, or delivers a data packet to an application layer within a time window based on the SN. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data packet means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

The embodiments are illustrated using an example where UE1 and UE2 are the transmitters, and UE3 is the receiver. UE1 and UE2 know the correlation between UE1 and UE2 (for example, via the pre-configuration or the group of UEs). The application layer transmits data packets of UE1 and UE2 to an AS of UE1 and an AS of UE2. The AS of UE1 and the AS of UE2 know, based on the SN, when to concurrently transmit the data packets to UE3. As such, after the data packets of UE1 and UE2 are transmitted over the air interface, the data of UE1 and the data of UE2 reach the receiver UE3 at the same time or within a proximity period, and thus are decoded at the receiver UE3 at the same time or within the proximity period.

The embodiments are illustrated using an example where UE1 and UE2 are the transmitters, and UE3 is the receiver. UE1 and UE2 know the correlation between UE1 and UE2 (for example, via the pre-configuration or the group of UEs). The AS of UE1 and the AS of UE2 know, based on the SN, when to concurrently transmit the data packets, then request to transmit resources of the data packets to UE3, and concurrently transmit the data packets to UE3 over the resources. As such, an NW schedules close resource positions for UE1 and UE2, such that the data of UE1 and the data of UE2 reach the receiver UE3 at the same time or within a proximity period, and are decoded at the receiver UE3 at the same time or within the proximity period.

The embodiments are illustrated using an example where UE1 and UE2 are the transmitters, and UE3 is the receiver. UE3 knows the correlation between UE1 and UE2 (for example, via the pre-configuration or the group of UEs). The AS of UE1 and the AS of UE2 know, based on the SN, to concurrently transmit the data packets. In a case where UE3 receives the data packet from UE1, but does not receive the data packet from UE2, UE3 requests UE2 to transmit the data packet or retransmits the data packet.

The embodiments are illustrated using an example where UE1 and UE2 are the transmitters, and an NW is the receiver. The NW knows the correlation between UE1 and UE2 (for example, via the pre-configuration or the group of UEs). The AS of UE1 and the AS of UE2 know, based on the SN, to concurrently transmit the data packets. In a case where the NW receives the data packet from UE1 at a time corresponding to the timestamp, but does not receive the data packet from UE1, but does not receive the data packet from UE2, the NW requests UE2 to transmit the data packet or retransmits the data packet.

The embodiments are illustrated using an example where UE1 is the transmitter, and UE2 and UE3 are the receivers. UE1 knows the correlation between UE2 and UE3 (for example, via the pre-configuration or the group of UEs). The application layer transmits data packets of UE3 and UE2 to the AS of UE1 based on the SN. The AS of UE1 concurrently transmit the data packets of UE2 and UE3 based on the SN. The timestamp information is transmitted from the high layer the AS or transmitted to the AS by carrying in the data packet.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The application layer transmits data packets of UE1 and UE2 to an AS of UE1 and an AS of UE2. The AS of UE1 and the AS of UE2 know, based on the SN, when to concurrently transmit the data packets to UE3. As such, after the data packets of UE1 and UE2 are transmitted over the air interface, the data of UE1 and the data of UE2 reach the receiver UE3 at the same time or within a proximity period, and thus are decoded at the receiver UE3 at the same time or within the proximity period.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The AS of UE1 and the AS of UE2 know, based on the SN, when to concurrently transmit the data packets, then request to transmit resources of the data packets to UE3, and concurrently transmit the data packets to UE3 over the resources. As such, an NW schedules close resource positions for UE1 and UE2, such that the data of UE1 and the data of UE2 reach the receiver UE3 at the same time or within a proximity period, and are decoded at the receiver UE3 at the same time or within the proximity period.

The embodiments are illustrated using an example where UE1 and UE2 are the transmitters, and UE3 is the receiver. UE3 knows the synchronization state between UE1 and UE2 (for example, via the pre-configuration or the group of UEs). The AS of UE1 and the AS of UE2 know, based on the SN, to concurrently transmit the data packets. In a case where UE3 receives the data packet from UE1, but does not receive the data packet from UE2, UE3 requests UE2 to transmit the data packet or retransmits the data packet.

The embodiments are illustrated using an example where UE1 and UE2 are the transmitters, and an NW is the receiver. The NW knows the synchronization state between UE1 and UE2 (for example, via the pre-configuration or the group of UEs). The AS of UE1 and the AS of UE2 know, based on the SN, to concurrently transmit the data packets. In a case where the NW receives the data packet from UE1 at a time corresponding to the timestamp, but does not receive the data packet from UE1, but does not receive the data packet from UE2, the NW requests UE2 to transmit the data packet or retransmits the data packet.

The embodiments are illustrated using an example where UE1 is the transmitter, and UE2 and UE3 are the receivers. UE1 knows the synchronization state between UE2 and UE3 (for example, via the pre-configuration or the group of UEs). The application layer transmits data packets of UE3 and UE2 to the AS of UE1 based on the SN. The AS of UE1 concurrently transmit the data packets of UE2 and UE3 based on the SN. The timestamp information is transmitted from the high layer the AS or transmitted to the AS by carrying in the data packet.

For example, based on the priority information, the transmitter buffers a data packet, transmits a data packet, delivers a data packet to a low layer, concurrently transmits data packets, concurrently delivers data packets to a low layer, transmits a data packet within a time window, delivers a data packet to a low layer within a time window, or buffers a data packet within a time window; buffers a data packet with a higher priority, transmits a data packet with a higher priority, delivers a data packet with a higher priority to a low layer, concurrently transmits data packets with higher priorities, concurrently delivers data packets to a low layer with higher priorities, transmits a data packet with a higher priority within a time window, delivers a data packet with a higher priority to a low layer within a time window, or buffers a data packet with a higher priority within a time window; buffers a data packet with a lower priority, transmits a data packet with a lower priority, delivers a data packet with a lower priority to a low layer, concurrently transmits data packets with lower priorities, concurrently delivers data packets to a low layer with lower priorities, transmits a data packet with a lower priority within a time window, delivers a data packet with a lower priority to a low layer within a time window, or buffers a data packet with a lower priority within a time window; or, buffers a data packet with the same priority, transmits a data packet with the same priority, delivers a data packet with the same priority to a low layer, concurrently transmits data packets with the same priority, concurrently delivers data packets to a low layer with the same priority, transmits a data packet with the same priority within a time window, delivers a data packet with the same priority to a low layer within a time window, or buffers a data packet with the same priority within a time window. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, based on the priority information, the receiver buffers a data packet, decodes a data packet, delivers a data packet to an application layer or a high layer, concurrently decodes data packets, concurrently delivers data packets to an application layer or a high layer, decodes a data packet within a time window, or delivers a data packet to an application layer within a time window; buffers a data packet with a higher priority, decodes a data packet with a higher priority, delivers a data packet with a higher priority to an application layer or a high layer, concurrently decodes data packets with higher priorities, concurrently delivers data packets with higher priorities to an application layer or a high layer, decodes a data packet with a higher priority within a time window, or delivers a data packet with a higher priority to an application layer within a time window; buffers a data packet with a lower priority, decodes a data packet with a lower priority, delivers a data packet with a lower priority to an application layer or a high layer, concurrently decodes data packets with lower priorities, concurrently delivers data packets with lower priorities to an application layer or a high layer, decodes a data packet with a lower priority within a time window, or delivers a data packet with a higher priority to an application layer within a time window; or, buffers a data packet with the same priority, decodes a data packet with the same priority, delivers a data packet with the same priority to an application layer or a high layer, concurrently decodes data packets with the same priority, concurrently delivers data packets with the same priority to an application layer or a high layer, decodes a data packet with the same priority within a time window, or delivers a data packet with the same priority to an application layer within a time window. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, based on the importance information or the reliability information, the transmitter buffers a data packet, transmits a data packet, delivers a data packet to a low layer, concurrently transmits data packets, concurrently delivers data packets to a low layer, transmits a data packet within a time window, delivers a data packet to a low layer within a time window, or buffers a data packet within a time window; buffers a data packet with a higher priority, transmits a data packet with a higher priority, delivers a data packet with a higher priority to a low layer, concurrently transmits data packets with higher priorities, concurrently delivers data packets to a low layer with higher priorities, transmits a data packet with a higher priority within a time window, delivers a data packet with a higher priority to a low layer within a time window, or buffers a data packet with a higher priority within a time window; buffers a data packet with a lower priority, transmits a data packet with a lower priority, delivers a data packet with a lower priority to a low layer, concurrently transmits data packets with lower priorities, concurrently delivers data packets to a low layer with lower priorities, transmits a data packet with a lower priority within a time window, delivers a data packet with a lower priority to a low layer within a time window, or buffers a data packet with a lower priority within a time window; or, buffers a data packet with the same priority, transmits a data packet with the same priority, delivers a data packet with the same priority to a low layer, concurrently transmits data packets with the same priority, concurrently delivers data packets to a low layer with the same priority, transmits a data packet with the same priority within a time window, delivers a data packet with the same priority to a low layer within a time window, or buffers a data packet with the same priority within a time window. In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

For example, based on the importance information or the reliability information, the receiver buffers a data packet, decodes a data packet, delivers a data packet to an application layer or a high layer, concurrently decodes data packets, concurrently delivers data packets to an application layer or a high layer, decodes a data packet within a time window, or delivers a data packet to an application layer within a time window; buffers a data packet with a higher priority, decodes a data packet with a higher priority, delivers a data packet with a higher priority to an application layer or a high layer, concurrently decodes data packets with higher priorities, concurrently delivers data packets with higher priorities to an application layer or a high layer, decodes a data packet with a higher priority within a time window, or delivers a data packet with a higher priority to an application layer within a time window; buffers a data packet with a lower priority, decodes a data packet with a lower priority, delivers a data packet with a lower priority to an application layer or a high layer, concurrently decodes data packets with lower priorities, concurrently delivers data packets with lower priorities to an application layer or a high layer, decodes a data packet with a lower priority within a time window, or delivers a data packet with a higher priority to an application layer within a time window; or, buffers a data packet with the same priority, decodes a data packet with the same priority, delivers a data packet with the same priority to an application layer or a high layer, concurrently decodes data packets with the same priority, concurrently delivers data packets with the same priority to an application layer or a high layer, decodes a data packet with the same priority within a time window, or delivers a data packet with the same priority to an application layer within a time window. In some embodiments, the receiver is a first receiver or a plurality of receivers. For example, the receiver is a UE, a plurality of UEs, a plurality of paths in a UE, a path in a UE, a relay, a plurality of relays, a plurality of paths in a relay, a path in a relay, or is between a UE and a relay. In some embodiments, the data burst means one or more data packets, a data packet set, correlated data packets, or synchronized data packets. For example, the UE processes correlated data packets concurrently, processes correlated data packets within a time, or processes correlated data packets at a condition. For example, the UE processes correlated data packets in association, processes correlated data packets within a time in association, or processes correlated data packets at a condition in association.

In some embodiments, in S410, the communication terminal acquires the first information via a receiver, a transmitter, or a network. Or, the communication terminal acquires the first information via internal interaction of the communication terminal, an indication from a high layer, an indication from an application layer, or an indication from an application server.

The embodiments are illustrated using an example where UE1 and UE2 are the transmitters, and UE3 is the receiver. UE1 and UE2 know the correlation between UE1 and UE2 (for example, via the pre-configuration or the group of UEs). The application layer transmits data packets of UE1 and UE2 to an AS of UE1 and an AS of UE2 at the same time or within the same period. The AS of UE1 buffers data in a case where the data packet thereof reaches, and transmits the data packet at a predefined time. The AS of UE2 buffers data in a case where the data packet thereof reaches, and transmits the data packet at a predefined time.. As such, after the data packets of UE1 and UE2 are transmitted over the air interface, the data packets of UE1 and UE2 reach UE3 at the same time or within the proximity period.

The embodiments are illustrated using an example where UE1 and UE2 are the transmitters, and UE3 is the receiver. UE1 and UE2 know the correlation between UE1 and UE2 (for example, via the pre-configuration or the group of UEs). The application layer transmits data packets of UE1 and UE2 to an AS of UE1 and an AS of UE2 at the same time or within the same period. In a case where the data packet thereof reaches, the AS of UE1 requests a resource from an NW for data transmission between UE1 and UE3 and transmission between UE2 and UE3. As such, the NW schedules close resource positions, such that the data from UE1 and the data from UE2 reach the receiver UE3 at the same time.

The embodiments are illustrated using an example where UE1 and UE2 are the transmitters, and UE3 is the receiver. UE3 knows the correlation between UE1 and UE2 (for example, via the pre-configuration or the group of UEs). The application layer transmits data packets of UE1 and UE2 to an AS of UE1 and an AS of UE2 at the same time or within the same period. In a case where UE3 receives the data packet from UE1, but does not receive the data packet from UE2, UE3 requests UE2 to transmit the data packet or retransmits the data packet.

The embodiments are illustrated using an example where UE1 and UE2 are the transmitters, and an NW is the receiver. UE1 and UE2 know the correlation between UE1 and UE2 (for example, via the pre-configuration or the group of UEs). The application layer transmits data packets of UE1 and UE2 to an AS of UE1 and an AS of UE2 at the same time or within the same period. In a case where the data packet thereof reaches, the AS of UE1 requests a resource from an NW for data transmission between UE1 and the NW and transmission between UE2 and the NW. As such, the NW schedules close resource positions, such that the data from UE1 and the data from UE2 reach the NW at the same time.

The embodiments are illustrated using an example where UE1 is the transmitter, and UE2 is correlated with UE3. UE1 knows the correlation between UE2 and UE3 (for example, via the pre-configuration or the group of UEs). The application layer transmits data packets of UE3 and UE2 to an AS of UE1 at the same time or within the same period. In a case where the data packet thereof reaches, the AS of UE1 transmits the data packets to UE2 and UE3.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The application layer transmits data packets of UE1 and UE2 to an AS of UE1 and an AS of UE2 at the same time or within the same period. The AS of UE1 buffers data in a case where the data packet thereof reaches, and transmits the data packet at a predefined time. The AS of UE2 buffers data in a case where the data packet thereof reaches, and transmits the data packet at a predefined time. As such, after the data packets of UE1 and UE2 are transmitted over the air interface, the data packets of UE1 and UE2 reach UE3 at the same time or within the proximity period.

The embodiments are illustrated using an example where UE1 and UE2 are the transmitters, and UE3 is the receiver. UE1 and UE2 know the synchronization state between UE1 and UE2 (for example, via the pre-configuration or the group of UEs). The application layer transmits data packets of UE1 and UE2 to an AS of UE1 and an AS of UE2 at the same time or within the same period. In a case where the data packet thereof reaches, the AS of UE1 requests a resource from an NW for data transmission between UE1 and UE3 and transmission between UE2 and UE3. As such, the NW schedules close resource positions, such that the data from UE1 and the data from UE2 reach the receiver UE3 at the same time.

The embodiments are illustrated using an example where UE1 and UE2 are the transmitters, and UE3 is the receiver. UE3 knows the synchronization state between UE1 and UE2 (for example, via the pre-configuration or the group of UEs). The application layer transmits data packets of UE1 and UE2 to an AS of UE1 and an AS of UE2 at the same time or within the same period. In a case where UE3 receives the data packet from UE1, but does not receive the data packet from UE2, UE3 requests UE2 to transmit the data packet or retransmits the data packet.

The embodiments are illustrated using an example where UE1 and UE2 are the transmitters, and an NW is the receiver. UE1 and UE2 know the synchronization state between UE1 and UE2 (for example, via the pre-configuration or the group of UEs). The application layer transmits data packets of UE1 and UE2 to an AS of UE1 and an AS of UE2 at the same time or within the same period. In a case where the data packet thereof reaches, the AS of UE1 requests a resource from an NW for data transmission between UE1 and the NW and transmission between UE2 and the NW. As such, the NW schedules close resource positions for UE1 and UE2, such that the data from UE1 and the data from UE2 reach the NW at the same time or within the proximity period.

The embodiments are illustrated using an example where UE1 is the transmitter, and UE2 is correlated with UE3. UE1 knows the synchronization state between UE2 and UE3 (for example, via the pre-configuration or the group of UEs). The application layer transmits data packets of UE3 and UE2 to an AS of UE1 at the same time or within the same period. In a case where the data packet thereof reaches, the AS of UE1 transmits the data packets to UE2 and UE3.

In some embodiments, in S410, the communication terminal determines, acquires, or identifies at least one of the first information or identification information corresponding to the first information based on at least one of:
pre-configuration information of an application layer or a station, indication information of a station, a QoS parameter or QoS configuration information corresponding to an application, a QoS parameter or QoS configuration information configured or indicated by a core network, a QoS parameter or QoS configuration information of an application or a core network, interaction information between UEs, information in a data packet from a high layer to a transmitter, information in a data burst from a high layer to a transmitter, information from an application layer or a non-access stratum (NAS) of a transmitter to the transmitter, information from a high layer or a NAS of another transmitter to a transmitter, information from another transmitter to a transmitter, information from a high layer or a NAS of another transmitter to a transmitter, information from an application layer or a NAS to a receiver, information from a high layer or a NAS of a receiver to the receiver, information from a high layer or a NAS of another receiver to a receiver, information from another receiver to a receiver, information from a transmitter to a receiver, information in a data burst from a transmitter to a receiver, or information in a PDU or a data packet from a transmitter to a receiver.

An identifier of the first information refers to an identifier of an object involved in at least one of the correlation or the synchronization state in the first information. For example, the identification information includes at least one of: a UE identifier, an application identifier, a service identifier, a QoS flow identifier, a bearer identifier, a DRB identifier, a carrier identifier, a session identifier, a PDU session identifier, an LCG identifier, an LCH identifier, a correlation group identifier, data packet information, data burst information, or path information.

In some embodiments, the at least one of the first information or the identification information corresponding to the first information is generated by the station, the UE, the application, the core network, the receiver, the transmitter, the relay, the correlated entity/object, or the synchronized entity or object.

In some embodiments, the at least one of the first information or the identification information corresponding to the first information is directly transmitted to the communication terminal or is forwarded to the communication terminal via another entity.

In some embodiments, at least one of the first information or the identification information corresponding to the first information is directly transmitted between communication terminals, for example, transmitted via a proximity service (PC5) and/or a Uu, transmitted between transmitters, between receivers, or between the receiver and the transmitter.

In some embodiments, at least one of the first information or the identification information corresponding to the first information is forwarded to the communication terminal via another entity, for example, transmitted via a PC5 and/or a Uu. For example, the at least one of the first information or the identification information corresponding to the first information is forwarded to the corresponding communication terminal, the communication terminal, the receiver, or the transmitter via the relay, another UE, or the station.

In some embodiments, at least one of the pre-configuration information of the application layer or the station, the indication information of the station, the QoS parameter or the QoS configuration information corresponding to the application, the QoS parameter or the QoS configuration information configured or indicated by the core network, the QoS parameter or the QoS configuration information of the application or the core network, the interaction information between the UEs, the information in the data packet from the high layer to the transmitter, the information in the data burst from the high layer to the transmitter, the information from the application layer or the NAS of the transmitter to the transmitter, the information from the high layer or the NAS of another transmitter to the transmitter, the information from another transmitter to the transmitter, the information from the high layer or the NAS of another transmitter to the transmitter, the information from the application layer or the NAS to the receiver, the information from the high layer or the NAS of the receiver to the receiver, the information from the high layer or the NAS of another receiver to the receiver, the information from another receiver to the receiver, the information from the transmitter to the receiver, the information in the data burst from the transmitter to the receiver, or the information in the PDU or the data packet from the transmitter to the receiver is directly transmitted to the communication terminal or is forwarded to the communication terminal via another entity.

In some embodiments, at least one of the pre-configuration information of the application layer or the station, the indication information of the station, the QoS parameter or the QoS configuration information corresponding to the application, the QoS parameter or the QoS configuration information configured or indicated by the core network, the QoS parameter or the QoS configuration information of the application or the core network, the interaction information between the UEs, the information in the data packet from the high layer to the transmitter, the information in the data burst from the high layer to the transmitter, the information from the application layer or the NAS of the transmitter to the transmitter, the information from the high layer or the NAS of another transmitter to the transmitter, the information from another transmitter to the transmitter, the information from the high layer or the NAS of another transmitter to the transmitter, the information from the application layer or the NAS to the receiver, the information from the high layer or the NAS of the receiver to the receiver, the information from the high layer or the NAS of another receiver to the receiver, the information from another receiver to the receiver, the information from the transmitter to the receiver, the information in the data burst from the transmitter to the receiver, or the information in the PDU or the data packet from the transmitter to the receiver is directly transmitted between communication terminals, for example, transmitted via a PC5 and/or a Uu, transmitted between transmitters, between receivers, or between the receiver and the transmitter.

In some embodiments, at least one of the pre-configuration information of the application layer or the station, the indication information of the station, the QoS parameter or the QoS configuration information corresponding to the application, the QoS parameter or the QoS configuration information configured or indicated by the core network, the QoS parameter or the QoS configuration information of the application or the core network, the interaction information between the UEs, the information in the data packet from the high layer to the transmitter, the information in the data burst from the high layer to the transmitter, the information from the application layer or the NAS of the transmitter to the transmitter, the information from the high layer or the NAS of another transmitter to the transmitter, the information from another transmitter to the transmitter, the information from the high layer or the NAS of another transmitter to the transmitter, the information from the application layer or the NAS to the receiver, the information from the high layer or the NAS of the receiver to the receiver, the information from the high layer or the NAS of another receiver to the receiver, the information from another receiver to the receiver, the information from the transmitter to the receiver, the information in the data burst from the transmitter to the receiver, or the information in the PDU or the data packet from the transmitter to the receiver is forwarded to the corresponding communication terminal, the communication terminal, the receiver, or the transmitter via the relay, another UE, or the station.

In some embodiments, the pre-configuration information of the application layer or the station is transmitted via an air interface (for example, Uu) and/or a PC5 interface. In some embodiments, the pre-configuration information of the application layer or the station is carried in a NAS message, radio resource control (RRC) configuration information, system information, a common RRC message, a dedicated RRC message, a medium access control (MAC) control element (CE), or a physical layer message. In some embodiments, the pre-configuration information includes correlation information and/or synchronization information and/or cooperation information for determining at least one of the correlation or the synchronization state, and/or, the pre-configuration information is used to perform the cooperative transmission or the synchronized transmission.

In some embodiments, the indication information of the station is transmitted via an air interface and/or a PC5 interface. In some embodiments, the indication information of the station is carried in a NAS message, RRC configuration information, system information, a common RRC message, a dedicated RRC message, a MAC CE, or a physical layer message. In some embodiments, the indication information of the station includes correlation information and/or synchronization information and/or cooperation information for determining at least one of the correlation or the synchronization state, and/or, the indication information of the station is used to perform the cooperative transmission or the synchronized transmission.

In some embodiments, the QoS parameter or the QoS configuration information corresponding to the application is transmitted via an air interface and/or a PC5 interface. In some embodiments, the QoS parameter or the QoS configuration information corresponding to the application is carried in a NAS message, RRC configuration information, system information, a common RRC message, a dedicated RRC message, a MAC CE, or a physical layer message. In some embodiments, the QoS parameter or the QoS configuration information corresponding to the application includes correlation information and/or synchronization information and/or cooperation information for determining at least one of the correlation or the synchronization state, and/or, the QoS parameter or the QoS configuration information corresponding to the application is used to perform the cooperative transmission or the synchronized transmission. In some embodiments, the QoS parameter or the QoS configuration information corresponding to the application includes latency information and/or priority information, and the like.

In some embodiments, the QoS parameter or the QoS configuration information configured or indicated by the core network is transmitted via an air interface and/or a PC5 interface. In some embodiments, the QoS parameter or the QoS configuration information configured or indicated by the core network is carried in a NAS message, RRC configuration information, system information, a common RRC message, a dedicated RRC message, a MAC CE, or a physical layer message. In some embodiments, the QoS parameter or the QoS configuration information configured or indicated by the core network includes correlation information and/or synchronization information and/or cooperation information for determining at least one of the correlation or the synchronization state, and/or, the QoS parameter or the QoS configuration information configured or indicated by the core network is used to perform the cooperative transmission or the synchronized transmission. In some embodiments, the QoS parameter or the QoS configuration information configured or indicated by the core network includes latency information and/or priority information, and the like.

In some embodiments, the QoS parameter or the QoS configuration information of the application or the core network is transmitted via an air interface and/or a PC5 interface. In some embodiments, the QoS parameter or the QoS configuration information of the application or the core network is carried in a NAS message, RRC configuration information, system information, a common RRC message, a dedicated RRC message, a MAC CE, or a physical layer message. In some embodiments, the QoS parameter or the QoS configuration information of the application or the core network includes correlation information and/or synchronization information and/or cooperation information for determining at least one of the correlation or the synchronization state, and/or, the QoS parameter or the QoS configuration information of the application or the core network is used to perform the cooperative transmission or the synchronized transmission. In some embodiments, the QoS parameter or the QoS configuration information of the application or the core network includes latency information and/or priority information, and the like.

In some embodiments, the interaction information is transmitted via a PC5 interface. In some embodiments, the interaction information is UE assistance information. For example, the interaction information is carried in a UE assistance information message. In some embodiments, the interaction information is carried in system information, a common RRC message, a dedicated RRC message, a MAC CE, or a physical layer message. In some embodiments, the interaction information includes correlation information and/or synchronization information and/or cooperation information for determining at least one of the correlation or the synchronization state, and/or, the interaction information is used to perform the cooperative transmission or the synchronized transmission.

In some embodiments, the interaction information is transmitted via a Uu interface. In some embodiments, the interaction information is carried in RRC configuration information, system information, a common RRC message, a dedicated RRC message, a MAC CE, a physical layer message, or a UE assistance information message (for example, the interaction information is carried in a UE assistance information message). In some embodiments, the interaction information includes correlation information and/or synchronization information and/or cooperation information for determining at least one of the correlation or the synchronization state, and/or, the interaction information is used to perform the cooperative transmission or the synchronized transmission.

In some embodiments, the information in the data packet from the high layer includes at least one of packet header information, payload information, or control information. In some embodiments, the information in the data packet from the high layer includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information in the data burst from the high layer includes at least one of packet header information, payload information, or control information. In some embodiments, the information in the data burst from the high layer includes at least one of a data packet, a PDU, a PDU set, or a data burst carrying the information, packet header information of the data packet or header information of the PDU, the PDU set, or the data burst, payload information of the data packet, the PDU, the PDU set, or the data burst, control information of the data burst, the data packet, the PDU, or the PDU set, or control information of the data burst, the data packet, or a path of the PDU, the PDU set, or the data burst. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC. In some embodiments, the path of the PDU set includes at least one of: a QoS flow corresponding to the PDU set, an application corresponding to the PDU set, a UE corresponding to the PDU set, a service corresponding to the PDU set, a bearer corresponding to the PDU set, a DRB corresponding to the PDU set, a carrier corresponding to the PDU set, a session corresponding to the PDU set, a PDU session corresponding to the PDU set, an LCH corresponding to the PDU set, an LCG corresponding to the PDU set, a correlation group corresponding to the PDU set, a data packet corresponding to the PDU set, or a data burst corresponding to the PDU set. In some embodiments, the path of the data burst includes at least one of: a QoS flow corresponding to the data burst, an application corresponding to the data burst, a UE corresponding to the data burst, a service corresponding to the data burst, a bearer corresponding to the data burst, a DRB corresponding to the data burst, a carrier corresponding to the data burst, a session corresponding to the data burst, a PDU session corresponding to the data burst, an LCH corresponding to the data burst, an LCG corresponding to the data burst, a correlation group corresponding to the data burst, a data packet corresponding to the data burst, or a data burst corresponding to the data burst.

In some embodiments, the information from the application layer or the NAS of the transmitter includes at least one of packet header information, payload information, or control information. In some embodiments, the information from the application layer or the NAS of the transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the high layer or the NAS of another transmitter includes at least one of packet header information, payload information, or control information. In some embodiments, the information from the high layer or the NAS of another transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from another transmitter includes at least one of packet header information, payload information, or control information. In some embodiments, the information from another transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the high layer or the NAS of another transmitter includes at least one of packet header information, payload information, or control information. In some embodiments, the information from the high layer or the NAS of another transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the application layer or the NAS includes at least one of packet header information, payload information, or control information. In some embodiments, the information from the application layer or the NAS includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the high layer or the NAS of the receiver includes at least one of packet header information, payload information, or control information. In some embodiments, the information from the high layer or the NAS of the receiver includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the high layer or the NAS of another receiver includes at least one of packet header information, payload information, or control information. In some embodiments, the information from the high layer or the NAS of another receiver includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from another receiver includes at least one of packet header information, payload information, or control information. In some embodiments, the information from another receiver includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information from the transmitter includes at least one of packet header information, payload information, or control information. In some embodiments, the information from the transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In some embodiments, the information in the data burst from the transmitter includes at least one of packet header information, payload information, or control information. In some embodiments, the information in the data burst from the transmitter includes at least one of a data packet, a PDU, a PDU set, or a data burst carrying the information, packet header information of the data packet or header information of the PDU, the PDU set, or the data burst, payload information of the data packet, the PDU, the PDU set, or the data burst, control information of the data burst, the data packet, the PDU, or the PDU set, or control information of the data burst, the data packet, or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC. In some embodiments, the path of the PDU set includes at least one of: a QoS flow corresponding to the PDU set, an application corresponding to the PDU set, a UE corresponding to the PDU set, a service corresponding to the PDU set, a bearer corresponding to the PDU set, a DRB corresponding to the PDU set, a carrier corresponding to the PDU set, a session corresponding to the PDU set, a PDU session corresponding to the PDU set, an LCH corresponding to the PDU set, an LCG corresponding to the PDU set, a correlation group corresponding to the PDU set, a data packet corresponding to the PDU set, or a data burst corresponding to the PDU set. In some embodiments, the path of the data burst includes at least one of: a QoS flow corresponding to the data burst, an application corresponding to the data burst, a UE corresponding to the data burst, a service corresponding to the data burst, a bearer corresponding to the data burst, a DRB corresponding to the data burst, a carrier corresponding to the data burst, a session corresponding to the data burst, a PDU session corresponding to the data burst, an LCH corresponding to the data burst, an LCG corresponding to the data burst, a correlation group corresponding to the data burst, a data packet corresponding to the data burst, or a data burst corresponding to the data burst.

In some embodiments, the information in the PDU or the data packet from the transmitter includes at least one of packet header information, payload information, or control information. In some embodiments, the information in the PDU or the data packet from the transmitter includes at least one of a data packet or a PDU carrying the information, packet header information of the data packet or header information of the PDU, payload information of the data packet or the PDU, control information of the data packet or the PDU, or control information of the data packet or a path of the PDU. In some embodiments, the path of the PDU includes at least one of: a QoS flow corresponding to the PDU, an application corresponding to the PDU, a UE corresponding to the PDU, a service corresponding to the PDU, a bearer corresponding to the PDU, a DRB corresponding to the PDU, a carrier corresponding to the PDU, a session corresponding to the PDU, a PDU session corresponding to the PDU, an LCH corresponding to the PDU, an LCG corresponding to the PDU, a correlation group corresponding to the PDU, a data packet corresponding to the PDU, or a data burst corresponding to the PDU. In some embodiments, the control information is carried in an RRC message, system information, assistance information, a MAC CE, or RRC.

In S420, the communication terminal performs cooperative transmission or synchronized transmission based on the first information.

In some embodiments, based on the first information, the communication terminal requests a peer terminal to perform the cooperative transmission or the synchronized transmission, requests a peer terminal for a requirement for the cooperative transmission, a requirement for the synchronized transmission, or the first information, transmits a requirement for the cooperative transmission, a requirement for the synchronized transmission, or the first information to a peer terminal, and/or, requests a peer terminal for a result of the cooperative transmission or a result of the synchronized transmission.

In some embodiments, based on the first information, the communication terminal performs the cooperative transmission or the synchronized transmission at the local terminal, feeds back a result of the cooperative transmission or a result of synchronized transmission to a peer terminal, and/or, requests a peer terminal for a requirement for the cooperative transmission, a requirement for the synchronized transmission, or the first information.

In some embodiments, based on the first information, the communication terminal performs the cooperative transmission or the synchronized transmission via a relay or a PC5 interface.

In some embodiments, based on the first information and via a relay or a PC5 interface, the communication terminal requests a peer terminal to perform the cooperative transmission or the synchronized transmission, requests a peer terminal for a requirement for the cooperative transmission, a requirement for the synchronized transmission, or the first information, transmits a requirement for the cooperative transmission, a requirement for the synchronized transmission, or the first information to a peer terminal, and/or, requests a peer terminal for a result of the cooperative transmission or a result of the synchronized transmission.

In some embodiments, based on the first information and via a relay or a PC5 interface, the communication terminal performs the cooperative transmission or the synchronized transmission at the local terminal, feeds back a result of the cooperative transmission or a result of the synchronized transmission to a peer terminal, and/or, requests a peer terminal for a requirement for the cooperative transmission, a requirement for the synchronized transmission, or the first information.

In some embodiments, based on the first information, the communication terminal performs the cooperative transmission or the synchronized transmission via a Uu interface.

In some embodiments, based on the first information and via a Uu interface, the communication terminal requests a peer terminal to perform the cooperative transmission or the synchronized transmission, requests a peer terminal for a requirement for the cooperative transmission, a requirement for the synchronized transmission, or the first information, transmits a requirement for the cooperative transmission, a requirement for the synchronized transmission, or the first information to a peer terminal, and/or, requests a peer terminal for a result of the cooperative transmission or a result of the synchronized transmission.

In some embodiments, based on the first information and via a Uu interface, the communication terminal performs the cooperative transmission or the synchronized transmission at the local terminal, feeds back a result of the cooperative transmission or a result of the synchronized transmission to a peer terminal, and/or, requests a peer terminal for a requirement for the cooperative transmission, a requirement for the synchronized transmission, or the first information.

In some embodiments, based on the first information, the communication terminal performs the cooperative transmission or the synchronized transmission via a relay, a PC5 interface, and/or a Uu interface.

In some embodiments, based on the first information and via a relay, a PC5 interface, and/or a Uu interface, the communication terminal requests a peer terminal to perform the cooperative transmission or the synchronized transmission, requests a peer terminal for a requirement for the cooperative transmission, a requirement for the synchronized transmission, or the first information, transmits a requirement for the cooperative transmission, a requirement for the synchronized transmission, or the first information to a peer terminal, and/or, requests a peer terminal for a result of the cooperative transmission or a result of the synchronized transmission.

In some embodiments, based on the first information and via a relay, a PC5 interface, and/or a Uu interface, the communication terminal performs the cooperative transmission or the synchronized transmission at the local terminal, feeds back a result of the cooperative transmission or a result of the synchronized transmission to a peer terminal, and/or, requests a peer terminal for a requirement for the cooperative transmission, a requirement for the synchronized transmission, or the first information.

In some embodiments, in a case where the communication terminal is a transmitter, the cooperative transmission or the synchronized transmission includes at least one of:
determining a correlation, determining a synchronization state, buffering data, transmitting a data packet, concurrently transmitting data packets, transmitting a data packet within a time window, transmitting a data packet at a condition, decoding data or delivering data to an application layer, concurrently decoding data or delivering data to an application layer, decoding data or delivering data to an application layer at a condition, decoding data or delivering data to an application layer within a time window, requesting a resource from the transmitter, recommending a used resource to a receiver, selecting a used resource, selecting a used resource set, requesting a resource from a receiver, requesting a resource from a network, requesting a resource used by the transmitter from a network, requesting a resource used by the receiver from a network, adjusting a data transmission priority, adjusting a resource transmission priority, prioritizing or de-prioritizing specific data, prioritizing or de-prioritizing a specific resource, assigning a high or low priority to transmission of data or a resource to be transmitted, adjusting a parameter of an LCH or an LCG, selecting a parameter of an LCH or an LCG, selecting a transmission parameter of a MAC or physical layer, adjusting or selecting a carrier, adjusting or selecting a transmission parameter of an RB, using duplicate transmission or repetitive transmission, not using duplicate transmission or repetitive transmission, canceling a synchronized or correlated data packet, instructing a receiver of a current data canceling result (for example, whether the SN is cancelled, and the like), instructing a receiver to cancel a synchronized or correlated data packet, instructing a receiver to cancel a data packet that has been cancelled by the transmitter, feeding back information to a receiver, transmitting first information to a receiver, transmitting assistance information to a receiver, transmitting first information to a network, transmitting assistance information to a network, transmitting first information to another transmitter, transmitting assistance information to another transmitter, transmitting first information to an entity related to the correlation or the synchronization state, transmitting assistance information to an entity related to the correlation or the synchronization state, requesting feedback from a receiver, or triggering feedback from a receiver.

In some embodiments, the transmitter is a first transmitter or a plurality of transmitters. For example, the transmitter is a UE, a plurality of UEs, a plurality of paths in a UE, a path in a UE, a relay, a plurality of relays, a plurality of paths in a relay, a path in a relay, or is between a UE and a relay. In some embodiments, the data or the data packet means one or more pieces of data or one or more data packets, a data set or a data packet set, correlated data or a correlated data packet, or synchronized data or a synchronized data packet. In some embodiments, the data or the data packet is data or data packets having the correlation or the synchronization state, or is data or data packets in a correlation group or a synchronization group, for example, the data or the data packet correlated with the LCG/LCH/QoS flow/UE/application/bearer/carrier/data burst. For example, the data or the data packet is one of a PDU, a PDU set, a data burst, a packet, or an information indication. For example, the UE processes data of correlated QoS flows concurrently, processes data of correlated QoS flows within a time, or processes data of correlated QoS flows at a condition. For example, the UE processes correlated data or data packets concurrently, processes correlated data or data packets within a time window, processes correlated data or data packets at a condition. For example, the UE processes correlated data or data packets in association, processes correlated data or data packets in association in association within a time, or processes correlated data or data packets at a condition in association.

For example, determining the correlation means determining a correlation of a plurality of objects based on the correlation or the synchronization state.

For example, determining the synchronization state means determining a synchronization state of a plurality of objects based on the correlation or the synchronization state.

For example, buffering the data means buffering correlated data packets based on the correlation or the synchronization state.

For example, transmitting the data packet means transmitting a data packet based on the correlation or the synchronization state.

For example, concurrently transmitting the data packets means concurrently transmitting correlated data packets based on the correlation or the synchronization state.

For example, transmitting the data packet within the time window means transmitting correlated data packets within the time window based on the correlation or the synchronization state.

For example, transmitting the data packet at the condition means transmitting correlated data packets at the condition based on the correlation or the synchronization state.

For example, decoding the data at the condition means decoding correlated data packets at the condition based on the correlation or the synchronization state.

For example, delivering the data to the application layer at the condition means delivering correlated data packets to the application layer at the condition based on the correlation or the synchronization state.

For example, concurrently decoding the data or delivering the data to the application layer means concurrently decoding data or delivering data to the application layer based on the correlation or the synchronization state.

For example, decoding the data or delivering the data to the application layer within the time window means decoding data or delivering data to the application layer within the time window based on the correlation or the synchronization state.

For example, requesting the resource from the transmitter means requesting a resource from the transmitter based on the correlation or the synchronization state.

For example, recommending the used resource to the receiver means recommending a used resource to the receiver based on the correlation or the synchronization state.

For example, selecting the used resource means selecting a used resource based on the correlation or the synchronization state.

For example, selecting the used resource set means selecting a used resource set based on the correlation or the synchronization state.

For example, requesting the resource from the receiver means requesting a resource from the receiver based on the correlation or the synchronization state.

For example, requesting the resource from the network means requesting a resource for direct communication transmission of an SL channel between the network and a peer UE or relay from the network. The resource for direct communication transmission means data correlated with transmission or retransmission.

For example, requesting the resource from the network means requesting a transmission resource for the network and a peer UE or relay from the network. The transmission resource means data correlated with transmission or retransmission.

For example, requesting the resource from the network means requesting a transmission resource for the network and a local UE or relay from the network. The transmission resource means data correlated with transmission or retransmission.

For example, adjusting the data transmission priority means adjusting a data transmission priority based on the correlation or the synchronization state.

For example, adjusting the resource transmission priority means adjusting a resource transmission priority based on the correlation or the synchronization state.

For example, prioritizing or de-prioritizing the specific data means prioritizing or de-prioritizing specific data based on the correlation or the synchronization state.

For example, prioritizing or de-prioritizing the specific resource means prioritizing or de-prioritizing a specific resource based on the correlation or the synchronization state.

For example, requesting the resource used by the transmitter from the network means requesting a resource for direct communication transmission of an SL channel between the transmitter and a peer UE or relay from the network. The resource for direct communication transmission means data correlated with transmission or retransmission.

For example, requesting a resource used by the receiver from the network means requesting a resource for direct communication transmission of an SL channel between the receiver and a peer UE or relay from the network. The resource for direct communication transmission means data correlated with transmission or retransmission.

For example, requesting the resource used by the transmitter from the network means requesting a transmission resource for the network and a transmitter UE or relay from the network. The transmission resource means data correlated with transmission or retransmission.

For example, requesting the resource used by the receiver from the network means requesting a transmission resource for the network and a receiver UE or relay from the network. The transmission resource means data correlated with transmission or retransmission.

For example, prioritizing or de-prioritizing the specific data means assigning a high priority to transmission of another part of the specific data in a case where part of the specific data has been transmitted; assigning a high priority to transmission of the specific data in a case where a QoS requirement of part of the specific data or specific data of a correlated object reaches a threshold (for example, a buffer duration is greater than or equal to a delay threshold, or a remaining duration is less than or equal to the threshold); assigning a high priority to transmission of the specific data in a case where a first duration reaches or a first timer expires; assigning a high priority to transmission of the specific data in a case where a stored data packet reaches a threshold (for example, a buffer duration is greater than or equal to a delay threshold, a remaining duration is less than or equal to the threshold, or an amount of buffer data is greater than or equal to a threshold); discarding a specific data packet or remaining part of specific data packets in a case where part of specific data packets loses; canceling a specific data packet in a case where a first duration reaches or a first timer expires; adjusting a transmission priority of a grant based on whether a MAC PDU includes a correlated data packet; adjusting or generating a MAC PDU based in information of the specific data; or, assigning a high priority to packetization of the specific data or generation or transmission of a MAC PDU based in information of the specific data.

For example, prioritizing or de-prioritizing the specific resource means assigning a high priority to transmission of another part of specific resources in a case where part of the specific resources has been transmitted; assigning a high priority to use of the specific resource in a case where a QoS requirement of part of correlated data or data of a correlated object reaches a threshold (for example, a buffer duration is greater than or equal to a delay threshold, or a remaining duration is less than or equal to the threshold); assigning a high priority to use of the specific resource in a case where a first duration reaches or a first timer expires; assigning a high priority to use of the specific resource in a case where a stored data packet reaches a threshold (for example, a buffer duration is greater than or equal to a delay threshold, a remaining duration is less than or equal to the threshold, or an amount of buffer data is greater than or equal to a threshold); discarding or remaining data packets in the specific resource in a case where part of data packets in specific resources loses; canceling a data packet in a specific resource in a case where a first duration reaches or a first timer expires; adjusting a transmission priority of a grant based on whether a MAC PDU includes a specific resource; adjusting or generating a MAC PDU based in information of the specific resource; or, assigning a high priority to packetization of the specific resource or generation or transmission of a MAC PDU based in information of the specific resource.

For example, assigning a high or low priority to transmission of the data or the resource to be transmitted means assigning a high priority to transmission of another correlated data in a case where part of the correlated data has been transmitted; assigning a high priority to transmission of correlated data in a case where a QoS requirement of part of the correlated data or data of a correlated object reaches a threshold (for example, a buffer duration is greater than or equal to a delay threshold, or a remaining duration is less than or equal to the threshold); assigning a high priority to transmission of correlated data in a case where a first duration reaches or a first timer expires; assigning a high priority to transmission of correlated data in a case where a stored data packet reaches a threshold (for example, a buffer duration is greater than or equal to a delay threshold, a remaining duration is less than or equal to the threshold, or an amount of buffer data is greater than or equal to a threshold); discarding a correlated data packet or remaining part of correlated data packets in a case where part of correlated data packets loses; canceling a correlated data packet in a case where a first duration reaches or a first timer expires; adjusting a transmission priority of a grant based on whether a MAC PDU includes a correlated data packet; adjusting or generating a MAC PDU based in information of the correlated data; or, assigning a high priority to packetization of the correlated data or generation or transmission of a MAC PDU based in information of the correlated data.

For example, adjusting the parameter of the LCH or the LCG means adjusting a parameter of the LCH or the LCG based on the correlation or the synchronization state.

For example, selecting the parameter of the LCH or the LCG means selecting a parameter of the LCH or the LCG based on the correlation or the synchronization state.

For example, selecting the transmission parameter of the MAC or physical layer means selecting a transmission parameter of a MAC or physical layer based on the correlation or the synchronization state.

For example, adjusting or selecting the carrier means adjusting or selecting a carrier based on the correlation or the synchronization state.

For example, adjusting or selecting the transmission parameter of the RB means adjusting or selecting a transmission parameter of the RB based on the correlation or the synchronization state.

For example, using duplicate transmission or repetitive transmission means using duplicate transmission or repetitive transmission based on the correlation or the synchronization state.

For example, not using duplicate transmission or repetitive transmission means not using duplicate transmission or repetitive transmission based on the correlation or the synchronization state.

For example, canceling the synchronized or correlated data packet means canceling a synchronized or correlated data packet based on the correlation or the synchronization state.

For example, instructing the receiver of the current data canceling result means instructing the receiver of a current data canceling result based on the correlation or the synchronization state.

For example, instructing the receiver to cancel the synchronized or correlated data packet means instructing the receiver to cancel a synchronized or correlated data packet based on the correlation or the synchronization state.

For example, instructing the receiver to cancel the data packet that has been cancelled by the transmitter means instructing the receiver to cancel a data packet that has been cancelled by the transmitter based on the correlation or the synchronization state.

For example, feeding back information to a receiver means feeding back information to the receiver based on the correlation or the synchronization state.

For example, transmitting the first information to the receiver means transmitting first information to the receiver based on the correlation or the synchronization state.

For example, transmitting the assistance information to the receiver means transmitting assistance information to the receiver based on the correlation or the synchronization state.

For example, transmitting the first information to the network means transmitting first information to the network based on the correlation or the synchronization state.

For example, transmitting the assistance information to the network means transmitting assistance information to the network based on the correlation or the synchronization state.

For example, transmitting first information to another transmitter means transmitting first information to another transmitter based on the correlation or the synchronization state.

For example, transmitting assistance information to another transmitter means transmitting assistance information to another transmitter based on the correlation or the synchronization state.

For example, transmitting first information to an entity related to the correlation or the synchronization state means transmitting first information to the entity related to the correlation or the synchronization state based on the correlation or the synchronization state.

For example, transmitting assistance information to an entity related to the correlation or the synchronization state means transmitting assistance information to the entity related to the correlation or the synchronization state based on the correlation or the synchronization state.

For example, requesting feedback from the receiver means requesting feedback from the receiver based on the correlation or the synchronization state.

For example, triggering feedback from the receiver means triggering feedback from the receiver based on the correlation or the synchronization state.

In some embodiments, in a case where the communication terminal is a receiver, the cooperative transmission or the synchronized transmission includes at least one of:
determining a correlation, determining a synchronization state, buffering data, receiving a data packet, requesting a resource from a transmitter, requesting a transmitter to transmit synchronized data or correlated data, concurrently decoding data or delivering data to an application layer, decoding data or delivering data to an application layer within a time window, requesting a resource from a network, requesting a resource used by a transmitter, requesting a resource used by a receiver, adjusting a data transmission priority, adjusting a resource transmission priority, prioritizing or de-prioritizing specific data, prioritizing or de-prioritizing a specific resource, assigning a high or low priority to transmission of data or a resource to be transmitted, assigning a high or low priority to processing of correlated or synchronized data or resources, requesting a transmitter to retransmit correlated or synchronized data packets, requesting a transmitter to retransmit part of correlated or synchronized data packets, transmitting a feedback packet to a transmitter, triggering a receiver to transmit a feedback packet, requesting a transmitter to retransmit a specific data packet in correlated data packets, canceling correlated or synchronized data packets, requesting a transmitter to feed back information of correlated or synchronized data packets cancelled by the transmitter, or reranking.

For example, determining the correlation means determining a correlation of a plurality of objects based on the correlation.

For example, determining the synchronization state means determining a synchronization state of a plurality of objects based on the synchronization state.

For example, buffering the data means buffering correlated data packets based on the correlation or the synchronization state.

For example, receiving the data packet means receiving a data packet based on the correlation or the synchronization state.

For example, requesting the resource from the transmitter means requesting a UE-UE transmission resource on an SL from the transmitter based on the correlation for transmission of a correlated data packet by the transmitter, for example, requesting the transmitter to transmit the correlated data packet or a correlated data packet on which resource or resource set, requesting the transmitter to send or transmit the correlated data packet or a correlated data packet, requesting the transmitter to transmit the correlated data packet or a retransmission packet of a correlated data packet on which resource or resource set, or requesting the transmitter to send or transmit the correlated data packet or a retransmission packet of a correlated data packet. In some embodiments, a resource or specific resource transmission is requested by interacting with a transmitter or an entity. In some embodiments, a resource or specific resource transmission is requested based on assistance information, an RRC message, a MAC message, a physical layer message. Retransmission of the data packet, feedback of a transmission state, or feedback of a receiving state is requested based on assistance information, an RRC message, a MAC message, a physical layer message. The transmitter is requested to transmit retransmission of the correlated data packet, feed back a transmission state, or feed back of a receiving state based on feedback from a high layer (for example, a packet data convergence protocol (PDCP) state report, a radio link control (RLC) automatic repeat request (ARQ)). In some embodiments, a trigger condition of feedback from the high layer is added, for example, transmission of the correlated data packet fails, part of correlated data packets reaches a first duration, a latency of the correlated data packet exceeds a first threshold, or an amount of data of part of correlated data packets exceeds a threshold.

For example, concurrently decoding the data or delivering the data to the application layer means concurrently decoding correlated data packers or delivering correlated data packers to the application layer based on the correlation or the synchronization state.

For example, decoding the data or delivering the data to the application layer within the time window means decoding correlated data packers or delivering correlated data packers to the application layer within the time window based on the correlation or the synchronization state.

For example, requesting the resource from the network means requesting a resource for direct communication transmission of an SL channel between the network and a peer UE or relay from the network. The resource for direct communication transmission means data correlated with transmission or retransmission. For example, a peer UE or a relay is requested to transmit the correlated data packet or a correlated data packet on which resource or resource set, a peer UE or a relay is requested to send or transmit the correlated data packet or a correlated data packet, a peer UE or a relay is requested to transmit the correlated data packet or a retransmission packet of a correlated data packet on which resource or resource set, or a peer UE or a relay is requested to send or transmit the correlated data packet or a retransmission packet of a correlated data packet. In some embodiments, a resource or specific resource transmission is requested by interacting with a peer UE or a relay or an entity. In some embodiments, a resource or specific resource transmission is requested based on assistance information, an RRC message, a MAC message, a physical layer message. Retransmission of the data packet, feedback of a transmission state, or feedback of a receiving state is requested based on assistance information, an RRC message, a MAC message, a physical layer message. The transmitter is requested to transmit retransmission of the correlated data packet, feed back a transmission state, or feed back of a receiving state based on feedback from a high layer (for example, a PDCP state report, an RLC ARQ). In some embodiments, a trigger condition of feedback from the high layer is added, for example, transmission of the correlated data packet fails, part of correlated data packets reaches a second duration, a latency of the correlated data packet exceeds a second threshold, or an amount of data of part of correlated data packets exceeds a threshold.

For example, requesting the resource from the network means requesting a transmission resource for the network and a peer UE or relay from the network. The transmission resource means data correlated with transmission or retransmission.

For example, requesting the resource from the network means requesting a transmission resource for the network and a local UE or relay from the network. The transmission resource means data correlated with transmission or retransmission.

For example, adjusting the data transmission priority means adjusting a data transmission priority based on the correlation or the synchronization state.

For example, adjusting the resource transmission priority means adjusting a resource transmission priority based on the correlation or the synchronization state.

For example, prioritizing or de-prioritizing the specific data means prioritizing or de-prioritizing specific data based on the correlation or the synchronization state.

For example, prioritizing or de-prioritizing the specific resource means prioritizing or de-prioritizing a specific resource based on the correlation or the synchronization state.

For example, requesting the resource used by the transmitter from the network means requesting a resource for direct communication transmission of an SL channel between the transmitter and a peer UE or relay from the network. The resource for direct communication transmission means data correlated with transmission or retransmission.

For example, requesting a resource used by the receiver from the network means requesting a resource for direct communication transmission of an SL channel between the receiver and a peer UE or relay from the network. The resource for direct communication transmission means data correlated with transmission or retransmission.

For example, requesting the resource used by the transmitter from the network means requesting a transmission resource for the network and a transmitter UE or relay from the network. The transmission resource means data correlated with transmission or retransmission.

For example, requesting the resource used by the receiver from the network means requesting a transmission resource for the network and a receiver UE or relay from the network. The transmission resource means data correlated with transmission or retransmission.

For example, prioritizing or de-prioritizing the specific data means assigning a high priority to transmission of another part of the specific data in a case where part of the specific data has been transmitted; assigning a high priority to transmission of the specific data in a case where a QoS requirement of part of the specific data or specific data of a correlated object reaches a threshold (for example, a buffer duration is greater than or equal to a delay threshold, or a remaining duration is less than or equal to the threshold); assigning a high priority to transmission of the specific data in a case where a first duration reaches or a first timer expires; assigning a high priority to transmission of the specific data in a case where a stored data packet reaches a threshold (for example, a buffer duration is greater than or equal to a delay threshold, a remaining duration is less than or equal to the threshold, or an amount of buffer data is greater than or equal to a threshold); discarding a specific data packet or remaining part of specific data packets in a case where part of specific data packets loses; canceling a specific data packet in a case where a first duration reaches or a first timer expires; adjusting a transmission priority of a grant based on whether a MAC PDU includes a correlated data packet; adjusting or generating a MAC PDU based in information of the specific data; or, assigning a high priority to packetization of the specific data or generation or transmission of a MAC PDU based in information of the specific data.

For example, prioritizing or de-prioritizing the specific resource means assigning a high priority to transmission of another part of specific resources in a case where part of the specific resources has been transmitted; assigning a high priority to use of the specific resource in a case where a QoS requirement of part of correlated data or data of a correlated object reaches a threshold (for example, a buffer duration is greater than or equal to a delay threshold, or a remaining duration is less than or equal to the threshold); assigning a high priority to use of the specific resource in a case where a first duration reaches or a first timer expires; assigning a high priority to use of the specific resource in a case where a stored data packet reaches a threshold (for example, a buffer duration is greater than or equal to a delay threshold, a remaining duration is less than or equal to the threshold, or an amount of buffer data is greater than or equal to a threshold); discarding or remaining data packets in the specific resource in a case where part of data packets in specific resources loses; canceling a data packet in a specific resource in a case where a first duration reaches or a first timer expires; adjusting a transmission priority of a grant based on whether a MAC PDU includes a specific resource; adjusting or generating a MAC PDU based in information of the specific resource; or, assigning a high priority to packetization of the specific resource or generation or transmission of a MAC PDU based in information of the specific resource.

For example, assigning a high or low priority to transmission of the data or the resource to be transmitted means discarding a correlated data packet or remaining part of correlated data packets in a case where part of correlated data packets loses, for example, canceling a correlated data packet in a case where a second duration reaches or a second timer expires, requesting a transmitter to cancel the correlated data packet or part of the correlated data packet in a case where the correlated data packet is discarded or partially discarded (for example, requesting the transmitter to cancel the correlated data packet or part of the correlated data packet in a case where the receiver cancels the correlated data packet or part of the correlated data packet), transmitting feedback or a trigger state report to a transmitter to indicate a state (for example, an ACK, a NACK, discard, non-mandatory, transmission finish) of the correlated data packet in a case where the correlated data packet is discarded or partially discarded (for example, transmitting the feedback or the trigger state report to the transmitter to indicate the state (for example, an ACK, a NACK, discard, non-mandatory, transmission finish) of the correlated data packet in a case where the receiver cancels the correlated data packet or part of the correlated data packet).

For example, prioritizing or de-prioritizing to process the correlated or synchronized data or resources means discarding a correlated data packet or remaining part of correlated data packets in a case where part of correlated data packets loses (for example, in a case where a second duration reaches or a second timer expires), requesting a transmitter to cancel the correlated data packet or part of the correlated data packet in a case where the correlated data packet is discarded or partially discarded (for example, requesting the transmitter to cancel the correlated data packet or part of the correlated data packet in a case where the receiver cancels the correlated data packet or part of the correlated data packet), transmitting feedback or a trigger state report to a transmitter to indicate a state (for example, an ACK, a NACK, discard, non-mandatory, transmission finish) of the correlated data packet in a case where the correlated data packet is discarded or partially discarded (for example, transmitting the feedback or the trigger state report to the transmitter to indicate the state (for example, an ACK, a NACK, discard, non-mandatory, transmission finish) of the correlated data packet in a case where the receiver cancels the correlated data packet or part of the correlated data packet).

For example, requesting the transmitter to retransmit correlated or synchronized data packets means requesting the transmitter to retransmit correlated or synchronized data packets based on the correlation or the synchronization state.

For example, requesting the transmitter to retransmit part of correlated or synchronized data packets means requesting the transmitter to retransmit part of correlated or synchronized data packets based on the correlation or the synchronization state.

For example, transmitting the feedback packet to a transmitter means transmitting a feedback packet to the transmitter based on the correlation or the synchronization state.

For example, triggering the receiver to transmit the feedback packet means triggering the receiver to transmit a feedback packet based on the correlation or the synchronization state.

For example, requesting the transmitter to retransmit the specific data packet in correlated data packets means requesting the transmitter to retransmit the specific data packet in correlated data packets based on the correlation or the synchronization state.

For example, canceling correlated or synchronized data packets means canceling correlated or synchronized data packets based on the correlation or the synchronization state.

For example, requesting the transmitter to feed back information of correlated or synchronized data packets cancelled by the transmitter means requesting the transmitter to feed back information of correlated or synchronized data packets cancelled by the transmitter based on the correlation or the synchronization state.

For example, reranking means reranking correlated or synchronized data packets based on the correlation or the synchronization state.

In the embodiments of the present disclosure, the first information includes at least one of the correlation or the synchronization state, and the communication terminal performs the cooperative transmission or the synchronized transmission based on the first information, such that the cooperative transmission or the synchronized transmission is implemented.

The technical solutions according to the embodiments of the present disclosure support behaviors of the transmitter for the synchronized transmission or the cooperative transmission and behaviors of the receiver for the synchronized transmission or the cooperative transmission. The technical solutions according to the embodiments of the present disclosure are illustrated in conjunction with the following embodiments.

Embodiments 1 (examples of synchronized transmission or cooperative transmission on an SL)

In some cases, a requirement for cooperative transmission or synchronized transmission is present between receivers, and thus a transmitter or the receiver performs the cooperative transmission or the synchronized transmission based on first information. The first information includes at least one of the correlation or the synchronization information (relationship).

In some embodiments, the correlation is present between UEs, applications, services, QoS flows, services, LCHs, or data packets.

In some embodiments, the synchronization state is a QoS parameter at a QoS flow level, or information at a packet level.

In some embodiments, the receiver include different UEs, or different paths (for example, LCHs or QoS flows) of the same UE.

In some cases, a requirement for cooperative transmission or synchronized transmission is present between transmitters, and thus a transmitter or the receiver performs the cooperative transmission or the synchronized transmission based on first information. The first information includes at least one of the correlation or the synchronization information (relationship).

In some embodiments, the correlation is present between UEs, applications, services, QoS flows, services, LCHs, or data packets.

In some embodiments, the synchronization state is a QoS parameter at a QoS flow level, or information at a packet level.

In some embodiments, the receiver includes different UEs, or different paths (for example, LCHs or QoS flows) of the same UE.

Embodiments 2 (supports behaviors of the transmitter for the synchronized transmission or the cooperative transmission)

The implementation of the embodiments are as follows.
1. The transmitter (for example, the UE) acquires or identifies correlation or synchronization information by at least one of the following processes.
   a) The transmitter determines, acquires, or identifies the correlation or synchronization information by one of the following modes.
      i. Alt a: the transmitter determines, acquires, or identifies correlation or synchronization information, or correlation or synchronized object information based on the pre-configuration information of the application layer or the station. In some embodiments, the pre-configuration information is transmitter over a Uu or PC5 interface.

In some embodiments, the pre-configuration information includes synchronization or correlation information.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the pre-configuration information or separate information.

ii. Alt b: the transmitter determines, acquires, or identifies correlation or synchronization information, or correlation or synchronized object information based on the interaction information between UEs. In some embodiments, the interaction information between UEs is transmitter over a PC5 interface.

In some embodiments, the interaction information between UEs includes synchronization or correlation information.

In some embodiments, the transmitter determines or acquires the cooperation or synchronization information based on indication from the receiver.

In some embodiments, the transmitters determine or acquire the cooperation or synchronization information based on interaction.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the interaction information or separate information.

iii. Alt c: the transmitter determines, acquires, or identifies correlation or synchronization information, or correlation or synchronized object information based on the information in the data packet from the high layer to the transmitter.

In some embodiments, the information in the data packet includes synchronization or correlation information.

For example, the transmitter determines, acquires, or identifies correlation or synchronization information based on information carried in the data packet, for example, packet header information or payload information.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the interaction information or separate information.

b) The correlation or synchronization information includes at least one of the following items.
i. Alt 1: the correlation. The correlation is present between UEs, applications, QoS flows, services, or LCHs. (In some embodiments, objects having the correlation are in a group. In a case where the correlation group is present, the correlation is determined based on a group identifier)
   Correspondingly, objects having the correlation perform cooperative transmission or synchronized transmission based on the correlation, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the transmitter and a peer UE from the transmitter, requesting a resource for direct communication transmission of an SL channel between the transmitter and a peer UE from a network, assigning a high or low priority to transmission of data or a resource to be transmitted, or requesting the transmitter to retransmit correlated data packets/part of correlated data packets/a specific data packet in correlated data packets.
ii. Alt 2: the synchronization state is a QoS parameter at a QoS flow level (for example, the synchronization state is a latency or priority information. Correspondingly, the transmitter UE selects appropriate resource based on the correlation (that is, the QoS parameter), and transmits a data packet corresponding to the QoS parameter to a peer terminal on the SL).
   In some embodiments, Alt a and Alt b are combined.
iii. Alt 3: the synchronization state is timestamp information at a packet level.

For example, the data packet carries the timestamp information.

The timestamp information is time information of the data packet that needs to be transmitted, received, or decoded.

Correspondingly, based on the correlation (that is, the timestamp information), objects perform cooperative transmission or synchronized transmission, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the transmitter and a peer UE from the transmitter, requesting a resource for direct communication transmission of an SL channel between the transmitter and a peer UE from a network, assigning a high or low priority to transmission of data or a resource to be transmitted, or requesting the transmitter to retransmit correlated data packets/part of correlated data packets/a specific data packet in correlated data packets.

For example, the transmitter buffers the data packet, concurrently transmits the data packets, or transmits the data packet within the time window based on the timestamp information.

For example, the receiver buffers the data packet, concurrently decodes the data packet or delivers the data packet to the application layer, decodes the data packet or delivers the data packet to the application layer within the time window based on the timestamp information.

iv. Alt 4: the synchronization state is SN information at a packet level.

For example, the synchronization state is an SN of the correlated data packet, a combination of SNs, a starting SN and a correlated end SN, or a starting SN and a number of correlated SNs.

Correspondingly, based on the correlation (that is, the SN information), objects perform cooperative transmission or synchronized transmission, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the transmitter and a peer UE from the transmitter, requesting a resource for direct communication transmission of an SL channel between the transmitter and a peer UE from a network, assigning a high or low priority to transmission of data or a resource to be transmitted, or requesting the transmitter to retransmit correlated data packets/part of correlated data packets/a specific data packet in correlated data packets.

For example, the transmitter buffers the data packet, concurrently transmits the data packets, or transmits the data packet within the time window based on the timestamp information.

For example, the receiver buffers the data packet correlated with the SN, concurrently decodes the data packet correlated with the SN or delivers the data packet correlated with the SN to the application layer, decodes the data packet correlated with the SN or delivers the data packet correlated with the SN to the application layer within the time window based on the timestamp information.

2. The transmitter performs cooperative transmission or synchronized transmission based on correlation or synchronization information. The cooperative transmission or synchronized transmission includes at least one of:
buffering data (buffering correlated data packets based on the correlation);
concurrently transmitting data packets/transmitting a data packet within a time window (selecting a UE-UE transmission resource on an SL based on the correlation, and/or, concurrently transmitting correlated data packets/transmitting correlated data packets within the time window);
requesting a resource for direct communication transmission of an SL channel between the transmitter and a peer UE from a network (the direct communication transmission is used to transmit correlated data or retransmit correlated data); or
assigning a high or low priority to transmission of data or a resource to be transmitted (for example, assigning a high priority to transmission of another part of data of the correlated objects in a case where part of the data of the correlated objects has been transmitted; assigning a high priority to transmission of the correlated data in a case where a QoS requirement of part of the data of the correlated objects or data of correlated objects reaches a threshold (for example, a buffer duration is greater than or equal to a delay threshold); discarding correlated data packets or remaining part of correlated data packets in a case where part of the correlated data packets loses; canceling correlated data packets in a case where a first duration reaches or a first timer expires; or, adjusting a transmission priority of a grant based on whether a MAC PDU includes correlated data packets).
   a) The transmitter UE and the receiver UE implement data transmission via a relay or SL direct communication.
   b) One or more transmitter UEs are disposed.
   c) One or more receiver UEs are disposed.

The technical effects of embodiments 2 are that information the transmitter is determined to ensure the requirement for cooperative transmission or synchronized transmission from the transmission perspective.

Embodiments 3 (supports behaviors of the receiver for the synchronized transmission or the cooperative transmission)

The implementation of the embodiments are as follows.
1. The receiver (for example, the UE) acquires or identifies correlation or synchronization information by at least one of the following processes.
   a) The receiver determines, acquires, or identifies the correlation or synchronization information by one of the following modes.
      i. Alt a: the receiver determines, acquires, or identifies correlation or synchronization information, or correlation or synchronized object information based on the pre-configuration information of the application layer or the station. In some embodiments, the pre-configuration information is transmitter over a Uu or PC5 interface.

In some embodiments, the pre-configuration information includes synchronization or correlation information.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the pre-configuration information or separate information.

ii. Alt b: the receiver determines, acquires, or identifies correlation or synchronization information, or correlation or synchronized object information based on the interaction information between UEs. In some embodiments, the interaction information between UEs is transmitter over a PC5 interface.

In some embodiments, the interaction information between UEs includes synchronization or correlation information.

In some embodiments, the receiver determines or acquires the cooperation or synchronization information based on indication from the transmitter.

In some embodiments, the receivers determine or acquire the cooperation or synchronization information based on interaction.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the interaction information or separate information.

iii. Alt c: the receiver determines, acquires, or identifies correlation or synchronization information, or correlation or synchronized object information based on the information in the data packet from the transmitter.

In some embodiments, the information in the data packet includes synchronization or correlation information.

For example, the receiver determines, acquires, or identifies correlation or synchronization information based on information carried in the data packet, for example, packet header information or payload information.

The object information may be a UE identifier, an application identifier, a service identifier, a QoS flow identifier, an LCH identifier, a correlation group identifier, data packet information, and the like.

In some embodiments, behaviors for the cooperative/synchronized transmission are indicated or enabled by the interaction information or separate information.

b) The correlation or synchronization information includes at least one of the following items.
i. Alt 1: the correlation. The correlation is present between UEs, applications, QoS flows, services, or LCHs. (In some embodiments, objects having the correlation are in a group. In a case where the correlation group is present, the correlation is determined based on a group identifier)
   Correspondingly, objects having the correlation perform cooperative transmission or synchronized transmission based on the correlation, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the receiver and a peer UE from the transmitter, requesting a resource for direct communication transmission of an SL channel between the receiver and a peer UE from a network, assigning a high or low priority to transmission of data or a resource to be transmitted, or requesting the transmitter to retransmit correlated data packets/part of correlated data packets/a specific data packet in correlated data packets.
ii. Alt 2: the synchronization state is a QoS parameter at a QoS flow level (for example, the synchronization state is a latency or priority information. Correspondingly, the transmitter UE selects appropriate resource based on the correlation (that is, the QoS parameter), and transmits a data packet corresponding to the QoS parameter to a peer terminal on the SL).
   In some embodiments, Alt a and Alt b are combined.
iii. Alt 3: the synchronization state is timestamp information at a packet level.

For example, the data packet carries the timestamp information.

The timestamp information is time information of the data packet that needs to be transmitted, received, or decoded.

Correspondingly, based on the correlation (that is, the timestamp information), objects perform cooperative transmission or synchronized transmission, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the receiver and a peer UE from the transmitter, requesting a resource for direct communication transmission of an SL channel between the receiver and a peer UE from a network, assigning a high or low priority to transmission of data or a resource to be transmitted, or requesting the transmitter to retransmit correlated data packets/part of correlated data packets/a specific data packet in correlated data packets.

For example, the transmitter buffers the data packet, concurrently transmits the data packets, or transmits the data packet within the time window based on the timestamp information.

For example, the receiver buffers the data packet, concurrently decodes the data packet or delivers the data packet to the application layer, decodes the data packet or delivers the data packet to the application layer within the time window based on the timestamp information.

iv. Alt 4: the synchronization state is SN information at a packet level.

For example, the synchronization state is an SN of the correlated data packet, a combination of SNs, a starting SN and a correlated end SN, or a starting SN and a number of correlated SNs.

Correspondingly, based on the correlation (that is, the SN information), objects perform cooperative transmission or synchronized transmission, for example, buffering data, concurrently transmitting data packets, transmitting a data packet within a time window, concurrently decoding data or delivering data to an application layer, decoding data or delivering data to an application layer within a time window, requesting a resource for direct communication transmission of an SL channel between the receiver and a peer UE from the transmitter, requesting a resource for direct communication transmission of an SL channel between the receiver and a peer UE from a network, assigning a high or low priority to transmission of data or a resource to be transmitted, or requesting the transmitter to retransmit correlated data packets/part of correlated data packets/a specific data packet in correlated data packets.

For example, the transmitter buffers the data packet, concurrently transmits the data packets, or transmits the data packet within the time window based on the timestamp information.

For example, the receiver buffers the data packet correlated with the SN, concurrently decodes the data packet correlated with the SN or delivers the data packet correlated with the SN to the application layer, decodes the data packet correlated with the SN or delivers the data packet correlated with the SN to the application layer within the time window based on the timestamp information.

2. The receiver performs cooperative transmission or synchronized transmission based on correlation or synchronization information. The cooperative transmission or synchronized transmission includes at least one of:
buffering data (buffering correlated data packets based on the correlation);
requesting the resource from the transmitter (for example, requesting a UE-UE transmission resource on an SL from the transmitter based on the correlation for transmission of a correlated data packet by the transmitter, requesting the transmitter to transmit the correlated data packet or a retransmission packet of a correlated data packet on which resource or resource set, requesting the transmitter to transmit retransmission of the correlated data packet based on feedback from a high layer (for example, a PDCP state report, an RLC ARQ). In some embodiments, a trigger condition of feedback from the high layer is added, for example, transmission of the correlated data packet fails, part of correlated data packets reaches a second duration, or a latency of the correlated data packet exceeds a second threshold);
concurrently decoding the data or delivering the data to the application layer, or decoding the data or delivering the data to the application layer within the time window (for example, concurrently decoding correlated data packers or delivering correlated data packers to the application layer based on the correlation, or decoding correlated data packers or delivering correlated data packers to the application layer within the time window based on the correlation);
requesting the resource for direct communication transmission of an SL channel between the transmitter and a peer UE from the network. The direct communication transmission is used to transmit correlated data or retransmit correlated data (for example, a PDCP state report, an RLC ARQ). In some embodiments, a trigger condition of feedback from the high layer is added, for example, transmission of the correlated data packet fails, part of correlated data packets reaches a second duration, or a latency of the correlated data packet exceeds a second threshold); or
assigning a high or low priority to transmission of the data or the resource to be transmitted means (for example, discarding a correlated data packet or remaining part of correlated data packets in a case where part of correlated data packets loses; canceling a correlated data packet in a case where a first duration reaches or a first timer expires, requesting a transmitter to cancel the correlated data packet or part of the correlated data packet in a case where the correlated data packet is discarded or partially discarded, requesting the transmitter to cancel the correlated data packet or part of the correlated data packet in a case where the receiver cancels the correlated data packet or part of the correlated data packet, transmitting feedback or a trigger state report to a transmitter to indicate a state (for example, an ACK, a NACK, discard, non-mandatory, transmission finish) of the correlated data packet in a case where the correlated data packet is discarded or partially discarded, or transmitting the feedback or the trigger state report to the transmitter to indicate the state (for example, an ACK, a NACK, discard, non-mandatory, transmission finish) of the correlated data packet in a case where the receiver cancels the correlated data packet or part of the correlated data packet).
   a) The receiver UE and the transmitter UE implement data transmission via a relay or SL direct communication.
   b) One or more receiver UEs are disposed.
   c) One or more transmitter UEs are disposed.

The technical effects of embodiments 3 are that information the receiver is determined to ensure the requirement for cooperative transmission or synchronized transmission from the transmission perspective.

Some solutions are provided for some problems or scenarios of relevant communication standard conference.

### (1) Problem and solution 1

In the RAN2#121bis conference, RAN 2 supports a retransmission-less functionality.

In some implementations, the retransmission-less is performed for the HARQ process.

In some implementations, the retransmission-less is performed for the configured grant (CG).

In some implementations, a gNB performs a periodic traffic using a CG and a dynamic grant (DG), for example, pose information or control information. In this case, in some embodiments, the retransmission-less is performed for the HARQ process.

In some implementations, a gNB transmits a periodic traffic using a CG, for example, pose information or control information. In this case, in some embodiments, the retransmission-less is performed for the HARQ process and/or the CG.

In some embodiments, if the initial transmission on a HARQ process of a CG configuration fails, the gNB would schedule a dynamic grant to re-transmit the MAC PDU of that corresponding HARQ process associated with that CG configuration. For the retransmission scheduling, DG of the correlated CG HARQ also uses the retransmission-less (for example, dynamic grant would also apply the function of retransmission-less since the same HARQ process and traffic is involved. In other words, the UE will disable the HARQ RTT timer for the uplink grant which is scheduled for retransmission for configuration scheduling-radio network temporary identity (CS-RNTI) of the MAC entity and associated with the HARQ process of a CG that enables the function of retransmission-less).

In some solutions, for CG configuration, a HARQ RTT timer is deactivated or disabled. In some embodiments, for all of the CG configuration or a specific HARQ process, a HARQ RTT timer is deactivated or disabled. In some embodiments, whether the CG configuration or the HARQ process for which the HARQ RTT timer is deactivated or disabled is determined based on network configuration. In some embodiments, the network indicates to deactivate the HARQ RTT timer, disable CG configuration of the HARQ RTT timer or an identifier of the HARQ process, identify the CG configuration in the CG configuration or a physical uplink shared channel (PUSCH) configuration, identify which HARQ process for which the HARQ RTT timer is deactivated, or disable the HARQ RTT timer. In some embodiments, functionalities of deactivating or disabling the HARQ RTT timer is also referred to as the retransmission-less functionality.

In some solutions, a conventional LCH mapping restriction is reused to determine a correlation between an LCH correlated with pose/control services and the CG/HARQ process performing the retransmission-less. That is, the conventional LCH mapping restriction is reused to determine which LCH is transmitted on the CG/HARQ process performing the retransmission-less. Alternatively, a new LCH mapping restriction is added to determine a correlation between an LCH correlated with pose/control services and the CG/HARQ process performing the retransmission-less. That is, the new LCH mapping restriction is added to determine which LCH is transmitted on the CG/HARQ process performing the retransmission-less.

In some solutions, the retransmission-less is used for the DG, that is, for the HARQ process corresponding to the DG, a HARQ RTT timer is deactivated or disabled. In some embodiments, the HARQ process of the DG is the HARQ process corresponding to the DG, the DG is scheduled by a CS-RNTI scrambled physical downlink control channel (PDCCH), and/or, the CS-RNTI indicates that NDI is equal to 1 (for example, disabling the HARQ RTT timer for an uplink grant which is scheduled for retransmission for CS-RNTI of the MAC entity and associated with the HARQ process of a specific retransmission-less CG).

### (2) Problem and solution 2

In a case where the UCI indicates non-use of a PUSCH occasion, at least one of the following factors is considered on how to set a bitmap in the UCI (that is, bitmap in the UTO-UCI).
1) The amount of available data buffered in the UE side.

In some implementations, the amount of available data buffered in the UE side is the main factor to determine in advance whether the CG would be used.

In some implementations, in a case where the UE knows in advance that no remaining data is to be transmitted on the pre-configured CG occasion, the UE may indicate the corresponding CG occasion as unused.

In some implementations, the amount of available data information would be calculated based on the data volume information associated with the corresponding logical channel.

In some implementations, the data volume information can be delivered to the physical layer, e.g., from the MAC layer.

In some implementations, the data volume information can be calculated at the MAC layer and/or delivered to the Physical layer, e.g., from the MAC layer.

In some implementations, the data volume information can be delivered to the Physical layer, e.g., from the MAC layer, and/or calculated at the physical layer.

In some implementations, data volume information can be calculated refer to the current data volume calculation procedure in TSs 38.322 [3] and 38.323 [4].

### 2) Whether the grant is to be de-prioritized.

In some implementations, according to the current spec, CG would collide with other PUCCH/PUSCH.

In some implementations, in a case where a CG occasion is de-prioritized, the UE may indicate the corresponding CG occasion as unused, such that blind detection of the collision resources by the gNB is optimized.

In some implementations, the MAC entity is used to determine whether collision is present, and then determine whether the grant is unused and/or determine a value of the bitmap in the UTO-UCI. In some embodiments, the MAC entity indicates information to the physical layer.

In some implementations, the physical layer is used to determine whether collision is present, and then determine whether the grant is unused and/or determine a value of the bitmap in the UTO-UCI. In some embodiments, the physical layer informs information to the physical layer. In some implementations, as the MAC layer is not aware of all collision cases, e.g., the collision between UEs or the collision between PUCCH of HARQ/CSI and PUSCH, it seems the physical layer is a suitable entity to determine whether a CG occasion is unused or not.

In some implementations, in a case where a grant (for example, a CG) is an unused CG, or the UTO-UCI indicates that the grant is an unused CG, the MAC does not generate the MAC PDU for the grant or CG, the MAC skips the grant or CG, the MAC determines the grant or CG as an unused grant or CG or an de-priority grant or CG, or the MAC does not deliver the grant and/or the corresponding MAC PDU and/or the corresponding HARQ information to the physical layer.

For example, if one CG occasion is determined and indicated as unused in UTO-UCI, the MAC layer should not generate a MAC PDU to such CG occasion, otherwise, the information in the MAC PDU should be delayed or outdated. Or the MAC layer consider such a CG occasion is not an available grant.

### (3) Problem and solution 3

For the PDU set discard, in some implementations, once PDU set discard is enabled, the transmitter PDCP entity starts a discard Timer for a PDCP service data unit (SDU) which is received from the upper layer.

For the PDU set discard, in some implementations, once PDU set discard is enabled, the transmitter PDCP entity starts a discard Timer for each PDCP SDU which is received from the upper layer and associated with a PDU set.

In some implementations, the transmitter PDCP entity discards all PDCP SDUs of the associated PDU set once the discard timer associated with the first SDU of that PDU set expires.

In some implementations, in a case where the network supports the PDU set discard, the network indicates the UE to perform the enhanced RLC or PDCP discard.

In some implementations, the enhanced RLC or PDCP discard includes a case, for example, RLC or PDCP layer also discards the packets that have been delivered to the lower layer.

In some implementations, the enhanced RLC or PDCP discard causes an SN gap issue and/or a receiving window stalling issue.

In some implementations, a notification mechanism is used or activated. The notification mechanism includes at least one of: the transmitter RLC entity to notify the receiver entity which PDUs are discarded.

For example, the transmitter RLC entity would notify the receiver entity which PDU(s) are discarded, or which PDU(s) should be considered as lost/received. As an example, the notification should be RLC PDU, e.g., RLC control PDU. As an example, the notification should contain the SN(s) of the discarded PDUs and/or SN(s) of the PDU set associated with the discarded PDUs.

For example, the transmitter PDCP entity would notify the receiver entity which PDU(s) are discarded, or which PDU(s) should be considered as lost/received. As an example, the notification should be PDCP PDU, e.g., PDCP control PDU. As an example, the notification should contain the SN(s) of the discarded PDUs and/or SN(s) of the PDU set associated with the discarded PDUs.

For example, the transmitter RLC or PDCP entity would notify the receiver entity such information in at least one of the following cases. 1) Periodic report or periodic timer expiration. For example, the periodic timer is based on DRB. For example, the periodic timer is enabled when the first packet is transmitted or when the first notification is transmitted. In some embodiments, a length of the period is configured by the RRC or the network. 2) the PDU set is discarded, or the transmitter cancels packets of one or more PDU sets. 3) A number of PDU sets canceled by the transmitter is greater than or equal to a first threshold. 4) A duration for the transmitter to cancel one or more PDU sets is greater than or equal to a second threshold. 5) Indication information triggered by the receiver that needs the transmitter to transmit a notification is received.

For example, the receiver RLC or PDCP entity would require the notification information from the transmitter entity in at least one of the following cases. 1) Periodic report or periodic timer expiration. For example, the periodic timer is based on DRB. For example, the periodic timer is enabled when the first packet is received, when the first request for the notification is transmitted, when an rearrangement timer is enabled or reenabled, or when a reassembly timer is enabled. In some embodiments, a length of the period is configured by the RRC or the network. 2) A duration for enabling the reassembly timer or the rearrangement timer is greater than or equal to a first threshold. 3) A receiving window is out of control. 4) Indication information of a notification from the transmitter is received, or after a first duration from reception of the notification information from the transmitter.

### (4) Problem and solution 4

In a case where data is not present in an LCG or LCH, the LCH/LCG is specific (for example, at least one of the LCH/LCG corresponding to a PDU set, corresponding to an XR, having PDU set information, having burst information, or the LCH/LCG of a network flag), in a case where the UE determines that the current packet carries an end of data burst indication, and/or in a case where the UE determines that the packets carry a packet of the end of data bust (further including other data packets of the period) are transmitted, the UE triggers buffer status report (BSR). In some embodiments, a volume of data to be transmitted of the LCH/LCG carried in the BSR information is 0, the BSR information does not include a volume of data to be transmitted, or, no data is to be transmitted subsequent to the current grant carrying the BSR. In some embodiments, the BSR is a periodic or padding BSR. Or, in a case where an LCG or LCH has no data, in a case where the LCH/LCG is specific (for example, at least one of the LCH/LCG corresponding to a PDU set, corresponding to an XR, having PDU set information, having burst information, or the LCH/LCG of a network flag), in a case where the UE determines that the current packet carries an end of data burst indication, and/or in a case where the UE determines that the packets carry a packet of the end of data bust (further including other data packets of the period) are transmitted, the UE triggers reporting of assistance information. In some embodiments, the assistance information is carried in the RRC, the MAC CE, or the UCI.

### (5) Problem and solution 5

In a case where a service cell enables or is to enable a cell discontinuous transmission (DTX) or cell discontinuous reception (DRX), and configures conditional handover (CHO) for the UE, the UE continues to keeps in the current service cell when the UE cannot find an appropriate target handover cell. In some embodiments, the UE reports to the network that the UE continues to keeps in the current service cell or the UE has not selected an appropriate target handover cell. In some embodiments, the service cell transmits a HO command to the UE to hand over the UE to another cell. In some embodiments, in a case where the UE experiences a wireless connection failure in the current service cell, the UE selects the current service cell, the cell corresponding to the HO command, or another cell for performing RRC reconstruction.

In a case where the service cell is closed or is to be closed, the CHO configuration is configured for the UE, and the UE fails to find an appropriate target handover cell, the UE performs RRC reconstruction, selects a target cell with the optimal channel quality, or continues to keep in the current service cell. In some embodiments, the UE reports to the service cell or the cell with the optimal channel quality that the UE continues to keep in the current service cell, the UE has not selected an appropriate target handover cell, or the channel quality of the current handover cell is poor. In some embodiments, the service cell or the cell with the optimal channel quality transmits the HO command to the UE to hand over the UE to another cell. In some embodiments, in a case where the UE experiences a wireless connection failure, the UE selects the cell corresponding to the HO command or another cell for performing RRC reconstruction.

### (6) Problem and solution 6

For cell DTX and/or cell DRX, cell DTX and/or cell DRX is activated/deactivated/used in at least one of the following modes.

Mode 1) RRC configures cell DTX and/or cell DRX, that is, cell DTX and/or cell DRX is activated/used; and/or, RRC de-configures cell DTX and/or cell DRX, that is, cell DTX and/or cell DRX is deactivated/not used.

Mode 2) RRC configures cell DTX and/or cell DRX, that is, it is determined or defaulted that cell DTX and/or cell DRX is activated. Based on the DCI, activation/deactivation/use of cell DTX and/or cell DRX changes. In a case where the DCI indicates activation/use of cell DTX and/or cell DRX, the cell DTX and/or cell DRX is activated or used; and/or, in a case where the DCI indicates deactivation/unuse of cell DTX and/or cell DRX, the cell DTX and/or cell DRX is deactivated or unused.

Mode 3) RRC configures cell DTX and/or cell DRX, and indicates an initial state, that is, whether the initial state of cell DTX and/or cell DRX is activated or deactivated. Based on the DCI, the activation/deactivation/use of cell DTX and/or cell DRX changes. In a case where the DCI indicates activation/use of cell DTX and/or cell DRX, the cell DTX and/or cell DRX is activated or used; and/or, in a case where the DCI indicates deactivation/unuse of cell DTX and/or cell DRX, the cell DTX and/or cell DRX is deactivated or unused.

Mode 4) RRC configures cell DTX and/or cell DRX, and indicates wait for the DCI to activate or deactivate cell DTX and/or cell DRX or deactivation of cell DTX and/or cell DRX by default. Based on the DCI, the activation/deactivation/use of cell DTX and/or cell DRX changes. In a case where the DCI indicates activation/use of cell DTX and/or cell DRX, the cell DTX and/or cell DRX is activated or used; and/or, in a case where the DCI indicates deactivation/unuse of cell DTX and/or cell DRX, the cell DTX and/or cell DRX is deactivated or unused.

Mode 5) RRC configures cell DTX and/or cell DRX. Initial usage information (for example, the initial position) of cell DTX and/or cell DRX is acquired based on the DCI; and/or, the activation/deactivation/use of cell DTX and/or cell DRX changes based on the DCI. In a case where the DCI indicates activation/use of cell DTX and/or cell DRX, the cell DTX and/or cell DRX is activated or used; and/or, in a case where the DCI indicates deactivation/unuse of cell DTX and/or cell DRX, the cell DTX and/or cell DRX is deactivated or unused.

Mode 6) One cell DTX and/or cell DRX only supports or is configured with one activation/deactivation mode. That is, one cell DTX and/or cell DRX only supports or is configured with the activation/deactivation mode based on RRC, or cell DTX and/or cell DRX only supports or is configured with the activation/deactivation mode based on DCI.

### (7) Problem and solution 7

For cell DTX and/or cell DRX, in the non-active period of cell DTX and/or cell DRX, the transmission and/or response to status report (SR) is in one of the following modes.

Mode 1) The UE does not transmit SR.

Furthermore, UE does not monitor PDCCH scheduling, for example, new transmission of PDCCH scheduling.

Mode 2) In a case where SR is triggered, and a first condition is satisfied, the UE transmits the SR. The first condition is that the SR is indicated as transmissible SR, an LCH corresponding to SR is indicated as transmissible SR, a priority of the SR or an LCH corresponding to the SR is greater than a first threshold, or a PUCCH available for transmitting the SR is present in anon-active period of the cell DTX and/or cell DRX.

Mode 3) The UE monitors PDCCH scheduling, for example, the new transmission of PDCCH scheduling. In some embodiments, the UE monitors the PDCCH scheduling following the SR transmission, following a first duration from the SR transmission, or within a second duration from transmission of a position by the SR. In some embodiments, the UE continuously monitors the PDCCH scheduling until receiving the PDCCH scheduling. Alternatively, the UE monitors the PDCCH scheduling within a third period, and a starting position of the third period is a position where the SR is transmitted, a first symbol following the SR transmission, a first duration from the SR transmission, or a first symbol following a first duration from the SR transmission. Furthermore, the UE monitors PDCCH scheduling, for example, the retransmission of PDCCH scheduling. In some embodiments, the UE monitors PDCCH scheduling following the SR transmission, following a first duration from following the SR transmission, or within a second duration from transmission of a position by the SR. In some embodiments, the UE continuously monitors the PDCCH scheduling until receiving the PDCCH scheduling. Alternatively, the UE monitors the PDCCH scheduling within a third period, and a starting position of the third period is a position where the SR is transmitted, a first symbol following the SR transmission, a first duration from the SR transmission, or a first symbol following a first duration from the SR transmission.

Mode 4) In a case where SR is triggered, and a second condition is satisfied, the UE transmits random access (RA)-SR/triggers random access channel (RACH), and/or cancels the SR. The second condition is that the SR is indicated as transmissible SR, an LCH corresponding to SR is indicated as transmissible SR, a priority of the SR or an LCH corresponding to the SR is greater than a first threshold, no PUCCH available for transmitting the SR is present in anon-active period of the cell DTX and/or cell DRX, a number of resource positions of a physical random access channel (PRACH) is greater than a number of resource positions of the PUCCH for transmitting the SR, or the PUCCH for transmitting the SR is de-prioritized.

Mode 5) The UE monitors PDCCH scheduling, for example, the new transmission of PDCCH scheduling. In some embodiments, the UE monitors the PDCCH scheduling in a RACH process, the UE monitors the PDCCH scheduling prior to expiration of a contention resolution timer, the UE does not terminate the contention resolution timer in the contention resolution case and monitors the PDCCH scheduling prior to expiration of the contention resolution timer. Furthermore, the UE monitors PDCCH scheduling, for example, the retransmission of PDCCH scheduling. In some embodiments, the UE monitors the PDCCH scheduling in a RACH process, the UE monitors the PDCCH scheduling prior to expiration of a contention resolution timer, the UE does not terminate the contention resolution timer in the contention resolution case and monitors the PDCCH scheduling prior to expiration of the contention resolution timer.

In some embodiments, the modes 4) and 5) in problem and solution 7 are combinable. In some embodiments, the modes 2) and 3) in problem and solution 7 are combinable.

The method embodiments of the present disclosure are described in detail in conjunction with FIG. 1 to FIG. 6. The apparatus embodiments of the present disclosure are described in detail hereinafter in conjunction with FIG. 7 and FIG. 8. It should be understood that description in the method embodiments corresponds to description in the apparatus embodiments. Therefore, for parts not detailed, reference may be made to the method embodiments.

FIG. 7 is a schematic block diagram of a communication apparatus according to some embodiments of the present disclosure. As illustrated in FIG. 7, the apparatus 700 includes an acquiring unit 710 and a transmitting unit 720.

The acquiring unit 710 is configured to acquire first information, wherein the first information includes at least one of a correlation or a synchronization state; and
the transmitting unit 720 is configured to perform cooperative transmission or synchronized transmission based on the first information.

In some embodiments, the correlation includes at least one of: a correlation between a plurality of UEs, a correlation between a plurality of applications, a correlation between a plurality of services, a correlation between a plurality of QoS flows, a correlation between a plurality of LCHs, a correlation between a plurality of LCGs, a correlation between a plurality of PDU sessions, a correlation between a plurality of data bursts, or a correlation between a plurality of data packets.

In some embodiments, the correlation includes at least one of: objects that use the first information and/or perform the cooperative transmission or the synchronized transmission belong to a same group, wherein the group includes at least one of: a group of UEs, a group of applications, a group of services, a group of QoS flows, a group of LCHs, a group of LCGs, a group of PDU sessions, a group of data bursts, or a group of data packets.

In some embodiments, the synchronization state includes at least one of: information at a QoS flow level, information at a PDU session level, information at an LCH level, information at an LCG level, information at a data burst level, or information at a data packet level.

In some embodiments, the information at the QoS flow level or information of the QoS flow includes at least one of: a QoS flow identifier, transmission latency budget information, latency information, or priority information; the information at the PDU session level or information of the PDU session includes at least one of: a PDU session identifier, transmission latency budget information, latency information, priority information, or corresponding service/application information; the information at the LCH level or information of the LCH includes at least one of: an LCH identifier, priority information, importance information, a PBR, a BSD, an available configured grant, an available carrier, an available dynamic grant, an LCH mapping restriction, a duplicate transmission configuration, or a repetitive transmission configuration; the information at the LCG level or information of the LCG includes at least one of: an LCG identifier, a corresponding LCH identifier, priority information, importance information, an available configured grant, an available carrier, an available dynamic grant, an LCG mapping restriction, a duplicate transmission configuration, or a repetitive transmission configuration; the information at the data burst level or information of the data burst includes at least one of: timestamp information of the data burst, data packet information correlated with the data burst, PDU information correlated with the data burst, PDU set information correlated with the data burst, a start time of the data burst, an end time of the data burst, a period of the data burst, pattern information of the data burst, priority information, importance information, generation time information, transmission time information, arrival time information, decoding time information, SN information, a duplicate transmission configuration, or a repetitive transmission configuration; and/or the information at the data packet level or information of the data packet includes at least one of: timestamp information of the data packet, priority information, importance information, generation time information, transmission time information, arrival time information, decoding time information, a duplicate transmission configuration, a repetitive transmission configuration, SN information, a duplicate transmission configuration, or a repetitive transmission configuration.

In some embodiments, the communication terminal includes one or more transmitters or one or more receivers.

In some embodiments, the communication terminal includes a plurality of UEs or different paths of a same UE.

In some embodiments, the acquiring unit is configured to: acquire the first information via a receiver, a transmitter, or a network; or acquire the first information via internal interaction of the communication terminal, an indication from a high layer, an indication from an application layer, or an indication from an application server.

In some embodiments, the acquiring unit is configured to: determine, acquire, or identify at least one of the first information or identification information corresponding to the first information based on at least one of: pre-configuration information of an application layer or a station, a QoS parameter or QoS configuration information of an application or a core network, interaction information between UEs, information in a data packet from a high layer to a transmitter, information in a data burst from a high layer to a transmitter, information in a data burst from a transmitter to a receiver, or information in a PDU or a data packet from a transmitter to a receiver.

In some embodiments, the identification information includes at least one of: a UE identifier, an application identifier, a service identifier, a QoS flow identifier, a PDU session identifier, an LCG identifier, an LCH identifier, a correlation group identifier, data packet information, or data burst information.

In some embodiments, the at least one of the first information or the identification information corresponding to the first information is generated by the station, a UE, the application, or the core network.

In some embodiments, the at least one of the first information or the identification information corresponding to the first information is directly transmitted to the communication terminal or is forwarded to the communication terminal via another entity.

In some embodiments, the pre-configuration information is transmitted via an air interface or a PC5 interface.

In some embodiments, the pre-configuration information includes correlation information and/or synchronization information and/or cooperation information for determining at least one of the correlation or the synchronization state, and/or, the pre-configuration information is used to perform the cooperative transmission or the synchronized transmission.

In some embodiments, the QoS parameter or the QoS configuration information is transmitted via an air interface or a PC5 interface.

In some embodiments, the QoS parameter or the QoS configuration information includes correlation information and/or synchronization information and/or cooperation information for determining at least one of the correlation or the synchronization state, and/or, the QoS parameter or the QoS configuration information is used to perform the cooperative transmission or the synchronized transmission.

In some embodiments, the interaction information is UE assistance information, or is transmitted via a PC5 interface.

In some embodiments, the interaction information includes correlation information and/or synchronization information and/or cooperation information for determining at least one of the correlation or the synchronization state, and/or, the interaction information is used to perform the cooperative transmission or the synchronized transmission.

In some embodiments, the information in the data packet from the high layer includes at least one of packet header information, payload information, or control information.

In some embodiments, the information in the data packet from the high layer includes at least one of a data packet or a PDU carrying the information, packet header information of the data packet or header information of the PDU, payload information of the data packet or the PDU, control information of the data packet or the PDU, or control information of the data packet or a path of the PDU.

In some embodiments, the information in the data burst from the high layer includes at least one of packet header information, payload information, or control information.

In some embodiments, the information in the data burst from the high layer includes at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

In some embodiments, the information in the data burst from the transmitter includes at least one of packet header information, payload information, or control information.

In some embodiments, the information in the data burst from the transmitter includes at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

In some embodiments, the information in the PDU or the data packet from the transmitter includes at least one of packet header information, payload information, or control information.

In some embodiments, the information in the PDU or the data packet from the transmitter includes at least one of a data packet or a PDU carrying the information, packet header information of the data packet or header information of the PDU, payload information of the data packet or the PDU, control information of the data packet or the PDU, or control information of the data packet or a path of the PDU.

In some embodiments, in a case where the communication terminal is a transmitter, the cooperative transmission or the synchronized transmission includes at least one of: buffering data, concurrently transmitting data packets, transmitting a data packet within a time window, concurrently decoding data or delivering data to an application layer, decoding data or delivering data to an application layer within a time window, requesting a resource from the transmitter, recommending a used resource to a receiver, requesting a resource from a network, assigning a high or low priority to transmission of data or a resource to be transmitted, adjusting a parameter of an LCH or an LCG, using duplicate transmission or repetitive transmission, canceling a synchronized or correlated data packet, instructing a receiver to cancel a synchronized or correlated data packet, instructing a receiver to cancel a data packet that has been cancelled by the transmitter, requesting feedback from a receiver, or triggering feedback from a receiver.

In some embodiments, in a case where the communication terminal is a receiver, the cooperative transmission or the synchronized transmission includes at least one of: buffering data, requesting a resource from a transmitter, requesting a transmitter to transmit synchronized data or correlated data, concurrently decoding data or delivering data to an application layer, decoding data or delivering data to an application layer within a time window, requesting a resource from a network, assigning a high or low priority to transmission of data or a resource to be transmitted, assigning a high or low priority to processing of correlated or synchronized data or resources, requesting a transmitter to retransmit a synchronized or correlated data packet, requesting a transmitter to retransmit part of a synchronized or correlated data packet, transmitting a feedback packet to a transmitter, triggering the receiver to transmit a feedback packet, requesting a transmitter to retransmit a specific data packet in a correlated data packet, canceling a synchronized or correlated data packet, or requesting a transmitter to feed back information of a synchronized or correlated data packet that is cancelled by the transmitter.

In some embodiments, the transmitting unit 720 is configured to: perform cooperative transmission or synchronized transmission based on the first information via a relay or a PC5 interface.

FIG. 8 is a schematic block diagram of a device according to some embodiments of the present disclosure. The dotted line in FIG. 8 indicate that the unit or module is optional. The device 800 is used to perform the methods according to the method embodiments. The device 800 is a chip or a communication device.

The device 800 includes one or more processors 810. The processor 810 supports the device 800 to perform the method according to the method embodiments. The processor 810 is a general-purpose processor or a dedicated processor. For example, the processor is a central processing unit (CPU). Alternatively, the processor is another general-purpose processor, a digital signal processor (DSP), an application-specific integrated circuits (ASIC), a field-programmable gate array (FPGA) or other programmable logic devices, a discrete gate or a transistor logic device, a discrete hardware assembly, and the like. The general-purpose processor is a microprocessor or any conventional processor, and the like.

The device 800 includes one or more memories 820. One or more programs are stored in the memory 820, and the processor 810 is configured to load and run the one or more programs to causes the device 800 to perform the methods according to the method embodiments. The memory 820 is a separate device independent of the processor 810 or is integrated in the processor 810.

In some embodiments, the communication device 800 further includes a transceiver 830, and the processor 810 is in communication with other devices or chips via the transceiver 830. For example, the processor 810 transmits data to other devices or chips or receives data from other devices or chips via the transceiver 830.

Some embodiments of the present disclosure provide a computer-readable storage medium configured to store one or more programs. The computer-readable storage medium is applicable to the communication device according to the embodiments of the present disclosure, and the one or more programs, when called and run by a computer, cause the computer to perform the method in the embodiments performed by the communication device.

Some embodiments of the present disclosure provide a computer program product. The computer program product includes one or more programs. The computer program product is applicable to the communication device according to the embodiments of the present disclosure, and the one or more programs, when called and run by a computer, cause the computer to perform the method in the embodiments performed by the communication device.

Some embodiments of the present disclosure provide a computer program. The computer program is applicable to the communication device according to the embodiments of the present disclosure, and the computer program, when loading and running, causes a computer to perform the method in the embodiments performed by the communication device.

It should be noted that in the embodiments of the present disclosure, the term "B corresponding to A" means that B is correlated with A or B is determined based on A. It should be noted that determining B based on A does not mean that B is determined only based on A, and B may be determined based on A and/or other information.

It should be noted that the term "and/or" herein only describes associations between correlated objects, and indicates three types of relationships. For example, the phrase "A and/or B" means (A), (B), or (A and B). In addition, he symbol "/" herein generally indicates an "or" relationship between the correlated objects.

It should be understood that in the embodiments of the present disclosure, the sequence number of the processes described herein does not imply the sequence of performing the processes, and the sequence of performing the processes is determined based on the functions and internal logics, and shall not constitute any limitation on the implementation process of the embodiments of the present disclosure.

In some embodiments of the present disclosure, it should be understood that the disclosed systems, devices and methods may be achieved in other modes. For example, the apparatus embodiments are merely illustrative. For example, division of the units is only a logical functional division. In actual implementations, other division methods may be present. For example, a plurality of units or assemblies may be combined or integrated into another system, or some features may be ignored or not performed. In addition, coupling, direct coupling, or communication connection between objects may be indirect coupling or communication connection via interfaces, devices, or units, and may be electrical, mechanical, or in others mode.

The units described as separate assemblies may be or may not be physically separated, and the assemblies displayed as units may be or may not be physical units, that is, may be disposed in a place or distributed in a plurality of network units. The purpose of the technical solutions according to the embodiments may be achieved by selecting part or all of units according to actual needs.

In addition, functional units in each embodiment of the present disclosure are integrated into a processing unit, various units exist separately, or two or more units are integrated into a unit.

All or part of the above embodiments may be practiced by software, hardware, firmware, or any combination thereof. When practiced by the software, all or part of the above embodiments are practiced in the form of a computer program product. The computer program product includes one or more computer instructions. When the one or more computer program instruction are loaded and executed by a computer, all or part of the processes or functions according to the embodiments of the present disclosure are achieved. The computer is a general computer, a special-purpose computer, a computer network, or other programmable devices. The computer instructions are stored in a computer-readable storage medium or are transmitted from a computer-readable storage medium to another computer-readable storage medium. For example, the computer instructions are transmitted from a web site, a computer, a server, or a data center to another website, another computer, another server, or another data center by a wired mode (for example, a coaxial cable, an optical fiber, a digital subscriber line (DSL) or a wireless mode (for example, infrared, wireless, microwave, and the like) transmission. The computer-readable storage medium is any available medium that the computer can access or a data storage device, for example, a server, a data center, which contains one or more integrated available mediums. The available medium is a magnetic medium (for example, a floppy disk, a hard disk, a tape), an optical medium (for example, a DVD), or a semiconductor medium (for example, a solid state disk (SSD)).

Described above are merely specific embodiments of the present disclosure, and the scope of protection of the present disclosure is not intended to this. Any modifications, equivalent replacements, improvements and the like made within the spirit and principles of the present disclosure by those skilled in the art should be encompassed within the scope of protection of the present disclosure. Thus, the scope of protection of the present disclosure follows the scope of the protection of the attached claims.

## Claims

1. A communication method, performed by a communication terminal, comprising:
acquiring first information, wherein the first information comprises at least one of a correlation or a synchronization state; and
performing cooperative transmission or synchronized transmission based on the first information.

2. The method according to claim 1, wherein the correlation comprises at least one of: a correlation between a plurality of user equipments (UEs), a correlation between a plurality of applications, a correlation between a plurality of services, a correlation between a plurality of quality of service (QoS) flows, a correlation between a plurality of logical channels (LCHs), a correlation between a plurality of logical channel groups (LCGs), a correlation between a plurality of packet data unit (PDU) sessions, a correlation between a plurality of data bursts, or a correlation between a plurality of data packets.

3. The method according to claim 1 or 2, wherein the correlation comprises at least one of: objects that use the first information and/or perform the cooperative transmission or the synchronized transmission belong to a same group, wherein the group comprises at least one of: a group of user equipments (UEs), a group of applications, a group of services, a group of quality of service (QoS) flows, a group of logical channels (LCHs), a group of logical channel groups (LCGs), a group of packet data unit (PDU) sessions, a group of data bursts, or a group of data packets.

4. The method according to any one of claims 1 to 3, wherein the synchronization state comprises at least one of: information at a quality of service (QoS) flow level, information at a packet data unit (PDU) session level, information at a logical channel (LCH) level, information at a logical channel group (LCG) level, information at a data burst level, or information at a data packet level.

5. The method according to claim 4, wherein
the information at the QoS flow level or information of a QoS flow comprises at least one of: a QoS flow identifier, transmission latency budget information, latency information, or priority information;
the information at the PDU session level or information of a PDU session comprises at least one of: a PDU session identifier, transmission latency budget information, latency information, priority information, or corresponding service/application information;
the information at the LCH level or information of an LCH comprises at least one of: an LCH identifier, priority information, importance information, a prioritized bit rate (PBR), a bucket size duration (BSD), an available configured grant, an available carrier, an available dynamic grant, an LCH mapping restriction, a duplicate transmission configuration, or a repetitive transmission configuration;
the information at the LCG level or information of an LCG comprises at least one of: an LCG identifier, a corresponding LCH identifier, priority information, importance information, an available configured grant, an available carrier, an available dynamic grant, an LCG mapping restriction, a duplicate transmission configuration, or a repetitive transmission configuration;
the information at the data burst level or information of a data burst comprises at least one of: timestamp information of the data burst, data packet information correlated with the data burst, PDU information correlated with the data burst, PDU set information correlated with the data burst, a start time of the data burst, an end time of the data burst, a period of the data burst, pattern information of the data burst, priority information, importance information, generation time information, transmission time information, arrival time information, decoding time information, sequence number (SN) information, a duplicate transmission configuration, or a repetitive transmission configuration; and/or
the information at the data packet level or information of a data packet comprises at least one of: timestamp information of the data packet, priority information, importance information, generation time information, transmission time information, arrival time information, decoding time information, a duplicate transmission configuration, a repetitive transmission configuration, SN information, a duplicate transmission configuration, or a repetitive transmission configuration.

6. The method according to any one of claims 1 to 5, wherein the communication terminal comprises one or more transmitters or one or more receivers.

7. The method according to any one of claims 1 to 6, wherein the communication terminal comprises a plurality of user equipments (UEs) or different paths of a same UE.

8. The method according to any one of claims 1 to 7, wherein acquiring the first information comprises:
acquiring the first information via a receiver, a transmitter, or a network; or
acquiring the first information via internal interaction of the communication terminal, an indication from a high layer, an indication from an application layer, or an indication from an application server.

9. The method according to any one of claims 1 to 8, wherein acquiring the first information comprises:
determining, acquiring, or identifying at least one of the first information or identification information corresponding to the first information based on at least one of: pre-configuration information of an application layer or a station, a quality of service (QoS) parameter or QoS configuration information of an application or a core network, interaction information between user equipments (UEs), information in a data packet from a high layer to a transmitter, information in a data burst from a high layer to a transmitter, information in a data burst from a transmitter to a receiver, or information in a packet data unit (PDU) or a data packet from a transmitter to a receiver.

10. The method according to claim 9, wherein the identification information comprises at least one of: a UE identifier, an application identifier, a service identifier, a QoS flow identifier, a PDU session identifier, a logical channel group (LCG) identifier, a logical channel (LCH) identifier, a correlation group identifier, data packet information, or data burst information.

11. The method according to claim 9 or 10, wherein the at least one of the first information or the identification information corresponding to the first information is generated by the station, the UE, the application, or the core network.

12. The method according to any one of claims 9 to 11, wherein the at least one of the first information or the identification information corresponding to the first information is directly transmitted to the communication terminal or is forwarded to the communication terminal via another entity.

13. The method according to any one of claims 9 to 12, wherein the pre-configuration information is transmitted via an air interface or a proximity service (PC5) interface.

14. The method according to any one of claims 9 to 13, wherein the pre-configuration information comprises correlation information and/or synchronization information and/or cooperation information for determining at least one of the correlation or the synchronization state, and/or, the pre-configuration information is used to perform the cooperative transmission or the synchronized transmission.

15. The method according to any one of claims 9 to 14, wherein the QoS parameter or the QoS configuration information is transmitted via an air interface or a proximity service (PC5) interface.

16. The method according to any one of claims 9 to 15, wherein the QoS parameter or the QoS configuration information comprises correlation information and/or synchronization information and/or cooperation information for determining at least one of the correlation or the synchronization state, and/or, the QoS parameter or the QoS configuration information is used to perform the cooperative transmission or the synchronized transmission.

17. The method according to any one of claims 9 to 16, wherein the interaction information is UE assistance information, or is transmitted via a proximity service (PC5) interface.

18. The method according to any one of claims 9 to 17, wherein the interaction information comprises correlation information and/or synchronization information and/or cooperation information for determining at least one of the correlation or the synchronization state, and/or, the interaction information is used to perform the cooperative transmission or the synchronized transmission.

19. The method according to any one of claims 9 to 18, wherein the information in the data packet from the high layer comprises at least one of packet header information, payload information, or control information.

20. The method according to any one of claims 9 to 19, wherein the information in the data packet from the high layer comprises at least one of a data packet or a PDU carrying the information, packet header information of the data packet or header information of the PDU, payload information of the data packet or the PDU, control information of the data packet or the PDU, or control information of the data packet or a path of the PDU.

21. The method according to any one of claims 9 to 20, wherein the information in the data burst from the high layer comprises at least one of packet header information, payload information, or control information.

22. The method according to any one of claims 9 to 21, wherein the information in the data burst from the high layer comprises at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

23. The method according to any one of claims 9 to 22, wherein the information in the data burst from the transmitter comprises at least one of packet header information, payload information, or control information.

24. The method according to any one of claims 9 to 23, wherein the information in the data burst from the transmitter comprises at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

25. The method according to any one of claims 9 to 24, wherein the information in the PDU or the data packet from the transmitter comprises at least one of packet header information, payload information, or control information.

26. The method according to any one of claims 9 to 25, wherein the information in the PDU or the data packet from the transmitter comprises at least one of a data packet or a PDU carrying the information, packet header information of the data packet or header information of the PDU, payload information of the data packet or the PDU, control information of the data packet or the PDU, or control information of the data packet or a path of the PDU.

27. The method according to any one of claims 1 to 26, wherein in a case where the communication terminal is a transmitter, the cooperative transmission or the synchronized transmission comprises at least one of: buffering data, concurrently transmitting data packets, transmitting a data packet within a time window, concurrently decoding data or delivering data to an application layer, decoding data or delivering data to an application layer within a time window, requesting a resource from the transmitter, recommending a used resource to a receiver, requesting a resource from a network, assigning a high or low priority to transmission of data or a resource to be transmitted, adjusting a parameter of a logical channel (LCH) or a logical channel group (LCG), using duplicate transmission or repetitive transmission, canceling a synchronized or correlated data packet, instructing a receiver to cancel a synchronized or correlated data packet, instructing a receiver to cancel a data packet that has been cancelled by the transmitter, requesting feedback from a receiver, or triggering feedback from a receiver.

28. The method according to any one of claims 1 to 27, wherein in a case where the communication terminal is a receiver, the cooperative transmission or the synchronized transmission comprises at least one of: buffering data, requesting a resource from a transmitter, requesting a transmitter to transmit synchronized data or correlated data, concurrently decoding data or delivering data to an application layer, decoding data or delivering data to an application layer within a time window, requesting a resource from a network, assigning a high or low priority to transmission of data or a resource to be transmitted, assigning a high or low priority to processing of correlated or synchronized data or resources, requesting a transmitter to retransmit a synchronized or correlated data packet, requesting a transmitter to retransmit part of a synchronized or correlated data packet, transmitting a feedback packet to a transmitter, triggering the receiver to transmit a feedback packet, requesting a transmitter to retransmit a specific data packet in a correlated data packet, canceling a synchronized or correlated data packet, or requesting a transmitter to feed back information of a synchronized or correlated data packet that is cancelled by the transmitter.

29. The method according to any one of claims 1 to 28, wherein performing the cooperative transmission or the synchronized transmission based on the first information comprises:
performing cooperative transmission or synchronized transmission based on the first information via a relay or a proximity service (PC5) interface.

30. A communication apparatus, comprising:
an acquiring unit, configured to acquire first information, wherein the first information comprises at least one of a correlation or a synchronization state; and
a transmitting unit, configured to perform cooperative transmission or synchronized transmission based on the first information.

31. The apparatus according to claim 30, wherein the correlation comprises at least one of: a correlation between a plurality of user equipments (UEs), a correlation between a plurality of applications, a correlation between a plurality of services, a correlation between a plurality of quality of service (QoS) flows, a correlation between a plurality of logical channels (LCHs), a correlation between a plurality of logical channel groups (LCGs), a correlation between a plurality of packet data unit (PDU) sessions, a correlation between a plurality of data bursts, or a correlation between a plurality of data packets.

32. The apparatus according to claim 30 or 31, wherein the correlation comprises at least one of: objects that use the first information and/or perform the cooperative transmission or the synchronized transmission belong to a same group, wherein the group comprises at least one of: a group of user equipments (UEs), a group of applications, a group of services, a group of quality of service (QoS) flows, a group of logical channels (LCH), a group of logical channel groups (LCGs), a group of packet data unit (PDU) sessions, a group of data bursts, or a group of data packets.

33. The apparatus according to any one of claims 30 to 32, wherein the synchronization state comprises at least one of: information at a quality of service (QoS) flow level, information at a packet data unit (PDU) session level, information at a logical channel (LCH) level, information at a logical channel group (LCG) level, information at a data burst level, or information at a data packet level.

34. The apparatus according to claim 33, wherein
the information at the QoS flow level or information of the QoS flow comprises at least one of: a QoS flow identifier, transmission latency budget information, latency information, or priority information;
the information at the PDU session level or information of the PDU session comprises at least one of: a PDU session identifier, transmission latency budget information, latency information, priority information, or corresponding service/application information;
the information at the LCH level or information of the LCH comprises at least one of: an LCH identifier, priority information, importance information, a prioritized bit rate (PBR), a bucket size duration (BSD), an available configured grant, an available carrier, an available dynamic grant, an LCH mapping restriction, a duplicate transmission configuration, or a repetitive transmission configuration;
the information at the LCG level or information of the LCG comprises at least one of: an LCG identifier, a corresponding LCH identifier, priority information, importance information, an available configured grant, an available carrier, an available dynamic grant, an LCG mapping restriction, a duplicate transmission configuration, or a repetitive transmission configuration;
the information at the data burst level or information of the data burst comprises at least one of: timestamp information of the data burst, data packet information correlated with the data burst, PDU information correlated with the data burst, PDU set information correlated with the data burst, a start time of the data burst, an end time of the data burst, a period of the data burst, pattern information of the data burst, priority information, importance information, generation time information, transmission time information, arrival time information, decoding time information, sequence number (SN) information, a duplicate transmission configuration, or a repetitive transmission configuration; and/or
the information at the data packet level or information of the data packet comprises at least one of: timestamp information of the data packet, priority information, importance information, generation time information, transmission time information, arrival time information, decoding time information, a duplicate transmission configuration, a repetitive transmission configuration, SN information, a duplicate transmission configuration, or a repetitive transmission configuration.

35. The apparatus according to any one of claims 30 to 34, wherein the apparatus comprises one or more transmitters or one or more receivers.

36. The apparatus according to any one of claims 30 to 35, wherein the apparatus comprises a plurality of user equipments (UEs) or different paths of a same UE.

37. The apparatus according to any one of claims 30 to 36, wherein the acquiring unit is further configured to:
acquire the first information via a receiver, a transmitter, or a network; or
acquire the first information via internal interaction of the apparatus, an indication from a high layer, an indication from an application layer, or an indication from an application server.

38. The apparatus according to any one of claims 30 to 37, wherein the acquiring unit is further configured to:
determine, acquire, or identify at least one of the first information or identification information corresponding to the first information based on at least one of: pre-configuration information of an application layer or a station, a quality of service (QoS) parameter or QoS configuration information of an application or a core network, interaction information between user equipments (UEs), information in a data packet from a high layer to a transmitter, information in a data burst from a high layer to a transmitter, information in a data burst from a transmitter to a receiver, or information in a packet data unit (PDU) or a data packet from a transmitter to a receiver.

39. The apparatus according to claim 38, wherein the identification information comprises at least one of: a UE identifier, an application identifier, a service identifier, a QoS flow identifier, a PDU session identifier, a logical channel group (LCG) identifier, a logical channel (LCH) identifier, a correlation group identifier, data packet information, or data burst information.

40. The apparatus according to claim 38 or 39, wherein the at least one of the first information or the identification information corresponding to the first information is generated by the station, a UE, the application, or the core network.

41. The apparatus according to any one of claims 38 to 39, wherein the at least one of the first information or the identification information corresponding to the first information is directly transmitted to the apparatus or is forwarded to the apparatus via another entity.

42. The apparatus according to any one of claims 38 to 41, wherein the pre-configuration information is transmitted via an air interface or a proximity service (PC5) interface.

43. The apparatus according to any one of claims 38 to 42, wherein the pre-configuration information comprises correlation information and/or synchronization information and/or cooperation information for determining at least one of the correlation or the synchronization state, and/or, the pre-configuration information is used to perform the cooperative transmission or the synchronized transmission.

44. The apparatus according to any one of claims 38 to 43, wherein the QoS parameter or the QoS configuration information is transmitted via an air interface or a proximity service (PC5) interface.

45. The apparatus according to any one of claims 38 to 44, wherein the QoS parameter or the QoS configuration information comprises correlation information and/or synchronization information and/or cooperation information for determining at least one of the correlation or the synchronization state, and/or, the QoS parameter or the QoS configuration information is used to perform the cooperative transmission or the synchronized transmission.

46. The apparatus according to any one of claims 38 to 45, wherein the interaction information is UE assistance information, or is transmitted via a proximity service (PC5) interface.

47. The apparatus according to any one of claims 38 to 46, wherein the interaction information comprises correlation information and/or synchronization information and/or cooperation information for determining at least one of the correlation or the synchronization state, and/or, the interaction information is used to perform the cooperative transmission or the synchronized transmission.

48. The apparatus according to any one of claims 38 to 47, wherein the information in the data packet from the high layer comprises at least one of packet header information, payload information, or control information.

49. The apparatus according to any one of claims 38 to 48, wherein the information in the data packet from the high layer comprises at least one of a data packet or a PDU carrying the information, packet header information of the data packet or header information of the PDU, payload information of the data packet or the PDU, control information of the data packet or the PDU, or control information of the data packet or a path of the PDU.

50. The apparatus according to any one of claims 38 to 49, wherein the information in the data burst from the high layer comprises at least one of packet header information, payload information, or control information.

51. The apparatus according to any one of claims 38 to 50, wherein the information in the data burst from the high layer comprises at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

52. The apparatus according to any one of claims 38 to 51, wherein the information in the data burst from the transmitter comprises at least one of packet header information, payload information, or control information.

53. The apparatus according to any one of claims 38 to 52, wherein the information in the data burst from the transmitter comprises at least one of a data packet or a PDU carrying the information, packet header information of the data packet or header information of the PDU, payload information of the data packet or the PDU, control information of the data burst, the data packet, or the PDU, or control information of the data burst, the data packet, or a path of the PDU.

54. The apparatus according to any one of claims 38 to 53, wherein the information in the PDU or the data packet from the transmitter comprises at least one of packet header information, payload information, or control information.

55. The apparatus according to any one of claims 38 to 54, wherein the information in the PDU or the data packet from the transmitter comprises at least one of a data packet or a PDU carrying the information, packet header information of the data packet or header information of the PDU, payload information of the data packet or the PDU, control information of the data packet or the PDU, or control information of the data packet or a path of the PDU.

56. The apparatus according to any one of claims 30 to 22, wherein in a case where the apparatus is a transmitter, the cooperative transmission or the synchronized transmission comprises at least one of: buffering data, concurrently transmitting data packets, transmitting a data packet within a time window, concurrently decoding data or delivering data to an application layer, decoding data or delivering data to an application layer within a time window, requesting a resource from the transmitter, recommending a used resource to a receiver, requesting a resource from a network, assigning a high or low priority to transmission of data or a resource to be transmitted, adjusting a parameter of a logical channel (LCH) or a logical channel group (LCG), using duplicate transmission or repetitive transmission, canceling a synchronized or correlated data packet, instructing a receiver to cancel a synchronized or correlated data packet, instructing a receiver to cancel a data packet that has been cancelled by the transmitter, requesting feedback from a receiver, or triggering feedback from a receiver.

57. The apparatus according to any one of claims 30 to 56, wherein in a case where the apparatus is a receiver, the cooperative transmission or the synchronized transmission comprises at least one of: buffering data, requesting a resource from a transmitter, requesting a transmitter to transmit synchronized data or correlated data, concurrently decoding data or delivering data to an application layer, decoding data or delivering data to an application layer within a time window, requesting a resource to a network, assigning a high or low priority to transmission of data or a resource to be transmitted, assigning a high or low priority to processing of correlated or synchronized data or resources, requesting a transmitter to retransmit a synchronized or correlated data packet, requesting a transmitter to retransmit part of a synchronized or correlated data packet, transmitting a feedback packet to a transmitter, triggering the receiver to transmit a feedback packet, requesting a transmitter to retransmit a specific data packet in a correlated data packet, canceling a synchronized or correlated data packet, or requesting a transmitter to feed back information of a synchronized or correlated data packet that is cancelled by the transmitter.

58. The apparatus according to any one of claims 30 to 57, wherein the transmitting unit is further configured to:
perform cooperative transmission or synchronized transmission based on the first information via a relay or a proximity service (PC5) interface.

59. A communication device, comprising: a memory and a processor, wherein the memory stores one or more programs, and the processor is configured to call the one or more programs in the memory to cause the communication device to perform the method as defined in any one of claims 1 to 29.

60. A communication device, comprising: a processor, wherein the processor is configured to call one or more programs from a memory to cause the communication device to perform the method as defined in any one of claims 1 to 29.

61. A chip, comprising: a processor, wherein the processor is configured to call one or more programs from a memory to cause a device equipped with the chip to perform the method as defined in any one of claims 1 to 29.

62. A computer-readable storage medium, storing: one or more programs, wherein the one or more programs, when called and run by a computer, cause the computer to perform the method as defined in any one of claims 1 to 29.

63. A computer program product, comprising: one or more programs, wherein the one or more programs, when called and run by a computer, cause the computer to perform the method as defined in any one of claims 1 to 29.

64. A computer program, wherein the computer program, when called and run by a computer, causes the computer to perform the method as defined in any one of claims 1 to 29.
